# EUROPEAN PATENT SPECIFICATION

(11) **EP 4 385 159 B1**
(45) Date of publication and mention of the grant of the patent: **23.09.2026**
(21) Application number: 22768835.5
(22) Date of filing: 25.08.2022
(51) Int. Cl.: H04L 1/18

(54) **METHODS, COMMUNICATIONS DEVICES, AND INFRASTRUCTURE EQUIPMENT**
VERFAHREN, KOMMUNIKATIONSVORRICHTUNGEN UND INFRASTRUKTURAUSRÜSTUNG
PROCÉDÉS, DISPOSITIFS DE COMMUNICATION, ET ÉQUIPEMENT D'INFRASTRUCTURE

(30) Priority: 01.10.2021 EP 21200586
(43) Date of publication of application: 19.06.2024
(73) Proprietor: Sony Group Corporation, Tokyo 108-0075 (JP); Sony Europe B.V., Weybridge, Surrey KT13 0XW (GB)
(72) Inventor: WONG, Shin Horng, Basingstoke Hampshire RG22 4SB (GB); KUSASHIMA, Naoki, Tokyo (JP); BEALE, Martin Warwick, Basingstoke Hampshire RG22 4SB (GB); AWAD, Yassin Aden, Basingstoke Hampshire RG22 4SB (GB)
(74) Representative: D Young & Co LLP
(86) International application number: PCT/EP2022/073710
(87) International publication number: WO 2023/052009

(56) References cited:
- WO-A1-2020/031155
- WO-A1-2021/087829
- ZTE: "Discussion on HARQ-ACK enhancements for eURLLC", vol. RAN WG1, no. e-Meeting; 20211011 - 20211019, 30 September 2021 (2021-09-30), XP052057725, Retrieved from the Internet <URL:https://ftp.3gpp.org/tsg_ran/WG1_RL1/TSGR1_106b-e/Docs/R1-2108840.zip R1-2108840 Discussion on HARQ-ACK enhancements for eURLLC.docx> [retrieved on 20210930]

## Description

### BACKGROUND

### Field of Disclosure

The present disclosure relates to a communications device, infrastructure equipment and methods of operating a communications device to receive data from a wireless communications network.

### Description of Related Art

The "background" description provided herein is for the purpose of generally presenting the context of the disclosure. Work of the presently named inventors, to the extent it is described in this background section, as well as aspects of the description which may not otherwise qualify as prior art at the time of filing, are neither expressly or impliedly admitted as prior art against the present invention.

Latest generation mobile telecommunication systems, such as those based on the 3GPP defined UMTS and Long Term Evolution (LTE) architecture, are able to support a wider range of services than simple voice and messaging services offered by previous generations of mobile telecommunication systems. For example, with the improved radio interface and enhanced data rates provided by LTE systems, a user is able to enjoy high data rate applications such as mobile video streaming and mobile video conferencing that would previously only have been available via a fixed line data connection. The demand to deploy such networks is therefore strong and the coverage area of these networks, i.e. geographic locations where access to the networks is possible, is expected to continue to increase rapidly.

Future wireless communications networks will be expected routinely and efficiently to support communications with an ever-increasing range of devices associated with a wider range of data traffic profiles and types than existing systems are optimised to support. For example, it is expected future wireless communications networks will be expected efficiently to support communications with devices including reduced complexity devices, machine type communication (MTC) devices, high resolution video displays, virtual reality headsets and so on. Some of these different types of devices may be deployed in very large numbers, for example low complexity devices for supporting the "The Internet of Things", and may typically be associated with the transmissions of relatively small amounts of data with relatively high latency tolerance. Other types of device, for example supporting high-definition video streaming, may be associated with transmissions of relatively large amounts of data with relatively low latency tolerance. Other types of device, for example used for autonomous vehicle communications and for other critical applications, may be characterised by data that should be transmitted through the network with low latency and high reliability. A single device type might also be associated with different traffic profiles / characteristics depending on the application(s) it is running. For example, different consideration may apply for efficiently supporting data exchange with a smartphone when it is running a video streaming application (high downlink data) as compared to when it is running an Internet browsing application (sporadic uplink and downlink data) or being used for voice communications by an emergency responder in an emergency scenario (data subject to stringent reliability and latency requirements).

In view of this there is expected to be a desire for future wireless communications networks, for example those which may be referred to as 5G or new radio (NR) systems / new radio access technology (RAT) systems, as well as future iterations / releases of existing systems, to efficiently support connectivity for a wide range of devices associated with different applications and different characteristic data traffic profiles and requirements.

One example of a new service is referred to as Ultra Reliable Low Latency Communications (URLLC) services which, as its name suggests, requires that a data unit or packet be communicated with a high reliability and with a low communications delay. Another example of a new service is Enhanced Mobile Broadband (eMBB) services, which are characterised by a high capacity with a requirement to support up to 20 Gb/s. URLLC and eMBB type services therefore represent challenging examples for both LTE type communications systems and 5G/NR communications systems.

The increasing use of different types of network infrastructure equipment and terminal devices associated with different traffic profiles give rise to new challenges for efficiently handling communications in wireless communications systems that need to be addressed.

WO 2021/087829 A1 discloses a method for triggering HARQ-ACK over unlicensed spectrum using a one-shot HARQ-ACK mechanism . The trigger is provided via a DCI that includes a time domain offset-information field indicating an offset between a time slot of a scheduled PDSCH resource and the PUCCH resource used to carry the HARQ-ACK

WO 2020/031155 A1 describes standard 5G NR frame structures, defining slots and sub-slots across different numerologies. It details standard HARQ-ACK transmission mechanisms where a DCI indicates a PDSCH-to-HARQ timing offset (k) to specify the slot for the corresponding PUCCH transmission.

Paper article "Discussion on HARQ-ACK enhancements for eURLLC" addresses HARQ-ACK enhancements for eURLLC, explicitly disclosing the dynamic triggering of a cancelled HARQ-ACK codebook for retransmission. It teaches using a triggering DCI that includes a temporal offset (e.g., a "PUCCH slot offset") to specifically identify the time slot of the targeted cancelled PUCCH that the UE needs to retransmit.

### SUMMARY OF THE DISCLOSURE

The present disclosure can help address or mitigate at least some of the issues discussed above.

The invention is defined by the subject matter of the independent claims.

Advantageous enhancements are subject to the dependent claims.

Respective aspects and features of the present disclosure are defined in the appended claims.

It is to be understood that both the foregoing general description and the following detailed description are exemplary, but are not restrictive, of the present technology. The described embodiments, together with further advantages, will be best understood by reference to the following detailed description taken in conjunction with the accompanying drawings.

### BRIEF DESCRIPTION OF THE DRAWINGS

A more complete appreciation of the disclosure and many of the attendant advantages thereof will be readily obtained as the same becomes better understood by reference to the following detailed description when considered in connection with the accompanying drawings wherein like reference numerals designate identical or corresponding parts throughout the several views, and wherein:
Figure 1 schematically represents some aspects of an LTE-type wireless telecommunication system which may be configured to operate in accordance with certain embodiments of the present disclosure;
Figure 2 schematically represents some aspects of a new radio access technology (RAT) wireless telecommunications system which may be configured to operate in accordance with certain embodiments of the present disclosure;
Figure 3 is a schematic block diagram of an example infrastructure equipment and communications device which may be configured to operate in accordance with certain embodiments of the present disclosure;
Figure 4 is an illustrative representation of communications resources in time and frequency for uplink and downlink channels of a time divided wireless access interface in which multiple Hybrid Automatic Repeat Request Acknowledgements (HARQ-ACK) may be multiplexed onto a single Physical Uplink Control Channel (PUCCH);
Figure 5 is an illustrative representation of communications resources in time and frequency for uplink and downlink channels of a time divided wireless access interface in which a PUCCH Resource Indicator is used to indicate onto which PUCCH HARQ-ACKs may be multiplexed;
Figure 6 is an illustrative representation of communications resources in time and frequency for uplink and downlink channels of a time divided wireless access interface in which an example of sub-slot based PUCCH is shown;
Figure 7 is an illustrative representation of communications resources in time and frequency for uplink and downlink channels of a time divided wireless access interface in which multiple HARQ-ACKs for Semi-Persistent Scheduling (SPS) Physical Downlink Shared Channels (PDSCHs) are be multiplexed onto a single PUCCH per sub-slot;
Figure 8 is an illustrative representation of communications resources in time and frequency for uplink and downlink channels of a time divided wireless access interface in which an example of two HARQ-ACK codebooks of different priorities is shown;
Figure 9 is an illustrative representation of communications resources in time and frequency for uplink and downlink channels of a time divided wireless access interface in which a 1-shot ReTx indicates a PUCCH for a HARQ-ACK retransmission;
Figure 10 is an illustrative representation of communications resources in time and frequency for uplink and downlink channels of a time divided wireless access interface in which an ambiguity arises as to which of two PUCCHs in an indicated slot is the target PUCCH;
Figure 11 is an illustrative representation of communications resources in time and frequency for uplink and downlink channels of a time divided wireless access interface in which K_{ReTx} is determined using the smallest K₁ granularity according to example embodiments;
Figure 12 is an illustrative representation of communications resources in time and frequency for uplink and downlink channels of a time divided wireless access interface in which a target PUCCH starts within an indicated slot/sub-slot according to example embodiments;
Figure 13 is an illustrative representation of communications resources in time and frequency for uplink and downlink channels of a time divided wireless access interface in which a target PUCCH ends within an indicated slot/sub-slot according to example embodiments;
Figure 14 is an illustrative representation of communications resources in time and frequency for uplink and downlink channels of a time divided wireless access interface in which a starting symbol S_{ReTx} of a target PUCCH according to example embodiments is shown;
Figure 15 is an illustrative representation of communications resources in time and frequency for uplink and downlink channels of a time divided wireless access interface in which K_{ReTx} and S_{ReTx} are used to indicate a target PUCCH that is not dropped according to example embodiments;
Figure 16 is an illustrative representation of communications resources in time and frequency for uplink and downlink channels of a time divided wireless access interface in which a target PUCCH is dropped according to example embodiments;
Figure 17 is an illustrative representation of communications resources in time and frequency for uplink and downlink channels of a time divided wireless access interface in which a target PUCCH is the PUCCH with the most HARQ-ACKs according to example embodiments;
Figure 18 is an illustrative representation of communications resources in time and frequency for uplink and downlink channels of a time divided wireless access interface in which a target PUCCH has the same L1 priority as a PUCCH carrying HARQ-ACK retransmissions according to example embodiments;
Figure 19 is an illustrative representation of communications resources in time and frequency for uplink and downlink channels of a time divided wireless access interface in which multiplexing of HARQ-ACKs in an indicated sub-slot according to example embodiments is shown;
Figure 20 is an illustrative representation of communications resources in time and frequency for uplink and downlink channels of a time divided wireless access interface in which a HARQ-ACK for a HPN collision corresponds to the latest PDSCH decoding outcome according to example embodiments;
Figure 21 is an illustrative representation of communications resources in time and frequency for uplink and downlink channels of a time divided wireless access interface in which a HARQ-ACK for a HPN collision corresponds to the PDSCH decoding outcome referenced by the target PUCCH according to example embodiments.

### DETAILED DESCRIPTION OF THE EMBODIMENTS

### Long Term Evolution Advanced Radio Access Technology (4G)

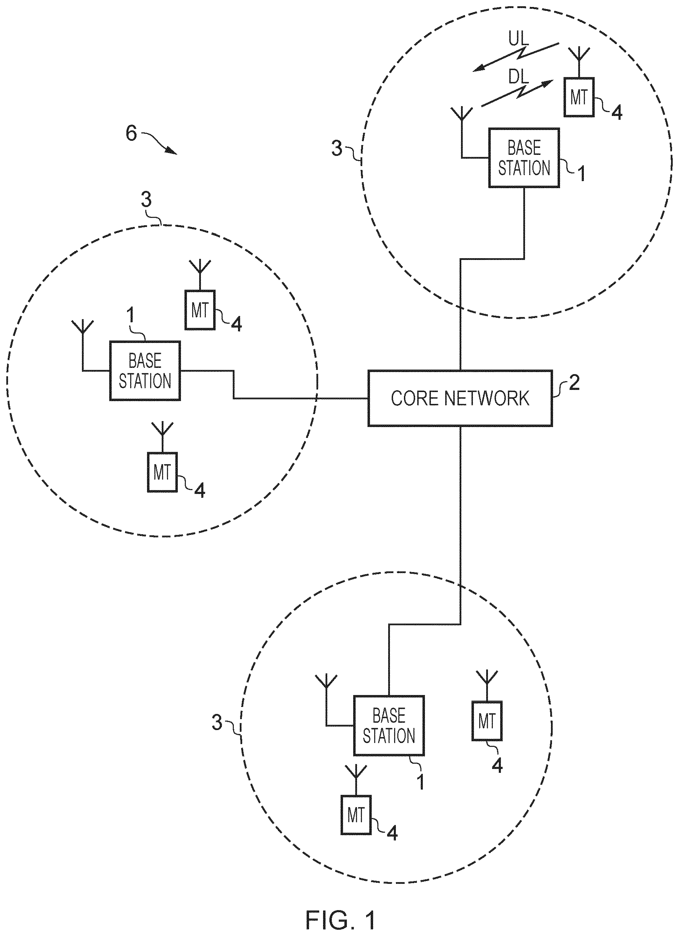

Figure 1 provides a schematic diagram illustrating some basic functionality of a mobile telecommunications network / system 6 operating generally in accordance with LTE principles, but which may also support other radio access technologies, and which may be adapted to implement embodiments of the disclosure as described herein. Various elements of Figure 1 and certain aspects of their respective modes of operation are well-known and defined in the relevant standards administered by the 3GPP (RTM) body, and also described in many books on the subject, for example, Holma H. and Toskala A [1]. It will be appreciated that operational aspects of the telecommunications networks discussed herein which are not specifically described (for example in relation to specific communication protocols and physical channels for communicating between different elements) may be implemented in accordance with any known techniques, for example according to the relevant standards and known proposed modifications and additions to the relevant standards.

The network 6 includes a plurality of base stations 1 connected to a core network 2. Each base station provides a coverage area 3 (i.e. a cell) within which data can be communicated to and from communications devices 4. Although each base station 1 is shown in Figure 1 as a single entity, the skilled person will appreciate that some of the functions of the base station may be carried out by disparate, inter-connected elements, such as antennas (or antennae), remote radio heads, amplifiers, etc. Collectively, one or more base stations may form a radio access network.

Data is transmitted from base stations 1 to communications devices 4 within their respective coverage areas 3 via a radio downlink. Data is transmitted from communications devices 4 to the base stations 1 via a radio uplink. The core network 2 routes data to and from the communications devices 4 via the respective base stations 1 and provides functions such as authentication, mobility management, charging and so on. Terminal devices may also be referred to as mobile stations, user equipment (UE), user terminal, mobile radio, communications device, and so forth. Services provided by the core network 2 may include connectivity to the internet or to external telephony services. The core network 2 may further track the location of the communications devices 4 so that it can efficiently contact (i.e. page) the communications devices 4 for transmitting downlink data towards the communications devices 4.

Base stations, which are an example of network infrastructure equipment, may also be referred to as transceiver stations, nodeBs, e-nodeBs, eNB, g-nodeBs, gNB and so forth. In this regard different terminology is often associated with different generations of wireless telecommunications systems for elements providing broadly comparable functionality. However, certain embodiments of the disclosure may be equally implemented in different generations of wireless telecommunications systems, and for simplicity certain terminology may be used regardless of the underlying network architecture. That is to say, the use of a specific term in relation to certain example implementations is not intended to indicate these implementations are limited to a certain generation of network that may be most associated with that particular terminology.

### New Radio Access Technology (5G)

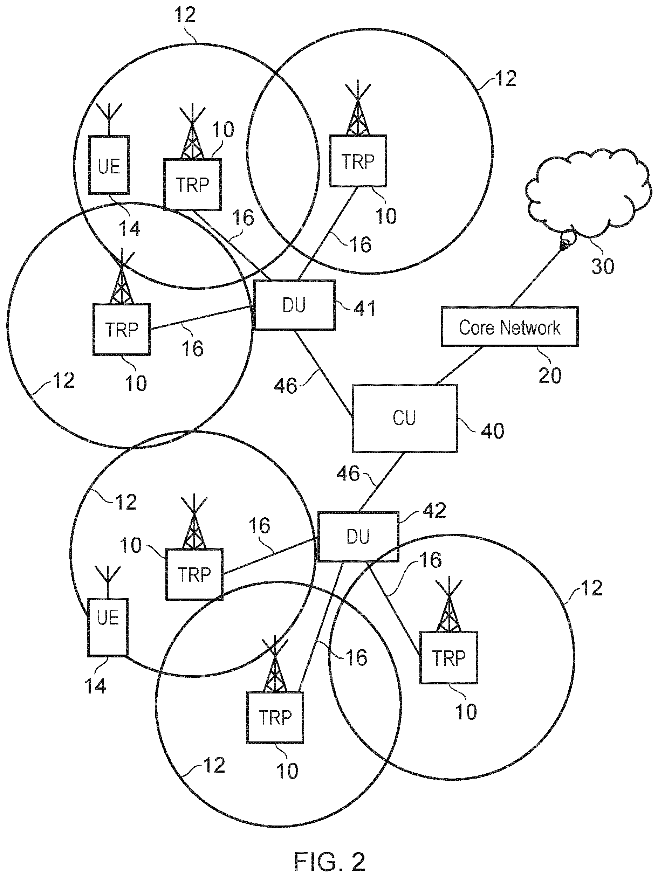

An example configuration of a wireless communications network which uses some of the terminology proposed for and used in NR and 5G is shown in Figure 2. In Figure 2 a plurality of transmission and reception points (TRPs) 10 are connected to distributed control units (DUs) 41, 42 by a connection interface represented as a line 16. Each of the TRPs 10 is arranged to transmit and receive signals via a wireless access interface within a radio frequency bandwidth available to the wireless communications network. Thus, within a range for performing radio communications via the wireless access interface, each of the TRPs 10, forms a cell of the wireless communications network as represented by a circle 12. As such, wireless communications devices 14 which are within a radio communications range provided by the cells 12 can transmit and receive signals to and from the TRPs 10 via the wireless access interface. Each of the distributed units 41, 42 are connected to a central unit (CU) 40 (which may be referred to as a controlling node) via an interface 46. The central unit 40 is then connected to the core network 20 which may contain all other functions required to transmit data for communicating to and from the wireless communications devices and the core network 20 may be connected to other networks 30.

The elements of the wireless access network shown in Figure 2 may operate in a similar way to corresponding elements of an LTE network as described with regard to the example of Figure 1. It will be appreciated that operational aspects of the telecommunications network represented in Figure 2, and of other networks discussed herein in accordance with embodiments of the disclosure, which are not specifically described (for example in relation to specific communication protocols and physical channels for communicating between different elements) may be implemented in accordance with any known techniques, for example according to currently used approaches for implementing such operational aspects of wireless telecommunications systems, e.g. in accordance with the relevant standards.

The TRPs 10 of Figure 2 may in part have a corresponding functionality to a base station or eNodeB of an LTE network. Similarly, the communications devices 14 may have a functionality corresponding to the UE devices 4 known for operation with an LTE network. It will be appreciated therefore that operational aspects of a new RAT network (for example in relation to specific communication protocols and physical channels for communicating between different elements) may be different to those known from LTE or other known mobile telecommunications standards. However, it will also be appreciated that each of the core network component, base stations and communications devices of a new RAT network will be functionally similar to, respectively, the core network component, base stations and communications devices of an LTE wireless communications network.

In terms of broad top-level functionality, the core network 20 connected to the new RAT telecommunications system represented in Figure 2 may be broadly considered to correspond with the core network 2 represented in Figure 1, and the respective central units 40 and their associated distributed units / TRPs 10 may be broadly considered to provide functionality corresponding to the base stations 1 of Figure 1. The term network infrastructure equipment / access node may be used to encompass these elements and more conventional base station type elements of wireless telecommunications systems. Depending on the application at hand the responsibility for scheduling transmissions which are scheduled on the radio interface between the respective distributed units and the communications devices may lie with the controlling node / central unit and / or the distributed units / TRPs. A communications device 14 is represented in Figure 2 within the coverage area of the first communication cell 12. This communications device 14 may thus exchange signalling with the first central unit 40 in the first communication cell 12 via one of the distributed units / TRPs 10 associated with the first communication cell 12.

It will further be appreciated that Figure 2 represents merely one example of a proposed architecture for a new RAT based telecommunications system in which approaches in accordance with the principles described herein may be adopted, and the functionality disclosed herein may also be applied in respect of wireless telecommunications systems having different architectures.

Thus, certain embodiments of the disclosure as discussed herein may be implemented in wireless telecommunication systems / networks according to various different architectures, such as the example architectures shown in Figures 1 and 2. It will thus be appreciated the specific wireless telecommunications architecture in any given implementation is not of primary significance to the principles described herein. In this regard, certain embodiments of the disclosure may be described generally in the context of communications between network infrastructure equipment / access nodes and a communications device, wherein the specific nature of the network infrastructure equipment / access node and the communications device will depend on the network infrastructure for the implementation at hand. For example, in some scenarios the network infrastructure equipment / access node may comprise a base station, such as an LTE-type base station 1 as shown in Figure 1 which is adapted to provide functionality in accordance with the principles described herein, and in other examples the network infrastructure equipment may comprise a control unit / controlling node 40 and / or a TRP 10 of the kind shown in Figure 2 which is adapted to provide functionality in accordance with the principles described herein.

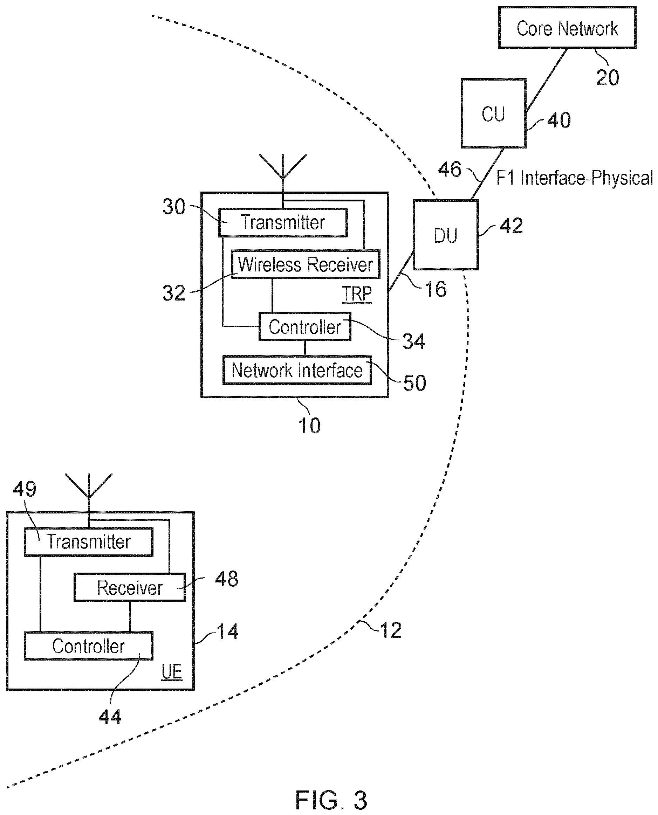

A more detailed diagram of some of the components of the network shown in Figure 2 is provided by Figure 3. In Figure 3, a TRP 10 as shown in Figure 2 comprises, as a simplified representation, a wireless transmitter 30, a wireless receiver 32 and a controller or controlling processor 34 which may operate to control the transmitter 30 and the wireless receiver 32 to transmit and receive radio signals to one or more UEs 14 within a cell 12 formed by the TRP 10. As shown in Figure 3, an example UE 14 is shown to include a corresponding transmitter 49, a receiver 48 and a controller 44 which is configured to control the transmitter 49 and the receiver 48 to transmit signals representing uplink data to the wireless communications network via the wireless access interface formed by the TRP 10 and to receive downlink data as signals transmitted by the transmitter 30 and received by the receiver 48 in accordance with the conventional operation.

The transmitters 30, 49 and the receivers 32, 48 (as well as other transmitters, receivers and transceivers described in relation to examples and embodiments of the present disclosure) may include radio frequency filters and amplifiers as well as signal processing components and devices in order to transmit and receive radio signals in accordance for example with the 5G/NR standard. The controllers 34, 44 (as well as other controllers described in relation to examples and embodiments of the present disclosure) may be, for example, a microprocessor, a CPU, or a dedicated chipset, etc., configured to carry out instructions which are stored on a computer readable medium, such as a non-volatile memory. The processing steps described herein may be carried out by, for example, a microprocessor in conjunction with a random access memory, operating according to instructions stored on a computer readable medium. The transmitters, the receivers and the controllers are schematically shown in Figure 3 as separate elements for ease of representation. However, it will be appreciated that the functionality of these elements can be provided in various different ways, for example using one or more suitably programmed programmable computer(s), or one or more suitably configured application-specific integrated circuit(s) / circuitry / chip(s) / chipset(s). As will be appreciated the infrastructure equipment / TRP / base station as well as the UE / communications device will in general comprise various other elements associated with its operating functionality.

As shown in Figure 3, the TRP 10 also includes a network interface 50 which connects to the DU 42 via a physical interface 16. The network interface 50 therefore provides a communication link for data and signalling traffic from the TRP 10 via the DU 42 and the CU 40 to the core network 20.

The interface 46 between the DU 42 and the CU 40 is known as the F1 interface which can be a physical or a logical interface. The F1 interface 46 between CU and DU may operate in accordance with specifications 3GPP TS 38.470 and 3GPP TS 38.473, and may be formed from a fibre optic or other wired or wireless high bandwidth connection. In one example the connection 16 from the TRP 10 to the DU 42 is via fibre optic. The connection between a TRP 10 and the core network 20 can be generally referred to as a backhaul, which comprises the interface 16 from the network interface 50 of the TRP10 to the DU 42 and the F1 interface 46 from the DU 42 to the CU 40.

### eURLLC and eMBB

Systems incorporating NR technology are expected to support different services (or types of services), which may be characterised by different requirements for latency, data rate and/or reliability. For example, Enhanced Mobile Broadband (eMBB) services are characterised by high capacity with a requirement to support up to 20 Gb/s. The requirements for Ultra Reliable and Low Latency Communications (URLLC) services are for one transmission of a 32 byte packet to be transmitted from the radio protocol layer 2/3 SDU ingress point to the radio protocol layer 2/3 SDU egress point of the radio interface within 1 ms with a reliability of 1 - 10⁻⁵ (99.999 %) or higher (99.9999%) [2].

Massive Machine Type Communications (mMTC) is another example of a service which may be supported by NR-based communications networks. In addition, systems may be expected to support further enhancements related to Industrial Internet of Things (IIoT) in order to support services with new requirements of high availability, high reliability, low latency, and in some cases, high-accuracy positioning.

Enhanced URLLC (eURLLC) [3] specifies features that require high reliability and low latency, such as factory automation, transport industry, electrical power distribution, etc. in a 5G system. eURLLC is further enhanced as IIoT-URLLC [4], for which one of the objectives is to enhance UE feedback for Hybrid Automatic Repeat Request Acknowledgements (HARQ-ACK) signalling for downlink transmissions (for example, PDSCH).

### PDSCH HARQ-ACK/NACK Signalling

Embodiments of the disclosure relate to a communications device and methods of operating a communications device in a wireless communications network for handling HARQ (Hybrid Automatic Repeat Request) feedback in respect of downlink transmissions in physical downlink shared channel (PDSCH) resources of a wireless access interface provided by the wireless communications network.

As will be appreciated, HARQ feedback is transmitted by a communications device (such as a UE) to an infrastructure equipment (such as a gNB) in respect of a scheduled PDSCH to inform the infrastructure equipment whether or not the communications device has successfully decoded the corresponding PDSCH. Each PDSCH may be transmitted according to a different HARQ process which may be assigned a particular HARQ Process Number (HPN) to identify the HARQ process for that PDSCH. The HPN number may be assigned by infrastructure equipment in the wireless communications network, such as a gNB. Each HARQ process involves transmitting a HARQ acknowledgment (i.e. an ACK) or a HARQ negative acknowledgment (i.e. a NACK) depending on whether the PDSCH transmitted according to that HARQ process was successfully received/decoded. For example, if the PDSCH was successfully received/decoded, the receiving communications device will send a HARQ acknowledgment (i.e. an ACK), and if the transmission was not successfully received the communications device will send a HARQ negative acknowledgment (i.e. a NACK).

It will be appreciated by one skilled in the art that references to "HARQ-ACK" can represent either an "ACK" or a "NACK", and is therefore used when it is not necessary to distinguish between an "ACK" and a "NACK".

For scheduled transmission of downlink data from an infrastructure equipment to a communications device in a wireless communications network, it is common for the infrastructure equipment to first send control signalling, e.g. on a downlink control channel (such as a PDCCH - Physical Downlink Control Channel), comprising downlink control information (DCI) which indicates (grants) downlink resources that are to be used to transmit the data, e.g. on a downlink shared channel (such as a PDSCH).

From this, the communications device can determine uplink resources to use to send uplink control information (UCI) comprising an ACK or NACK in respect of the data, e.g. on an uplink control channel (such as a PUCCH), although it may also be on an uplink shared channel (such as a PUSCH). The communications device then seeks to receive the data on the indicated resources on the PDSCH. If the communications device successfully decodes the data, then the communications device transmits UCI on the determined uplink resources comprising an ACK. If the communications device does not successfully decode the data, the communications device transmits UCI on the determined uplink resources comprising a NACK. This allows the infrastructure equipment to determine if it should schedule a retransmission of the data.

So as to provide some particular examples, certain embodiments of the disclosure will be described herein in the context of HARQ-ACK retransmissions in respect of downlink transmissions of URLLC data and using terminology, for example in respect of channel names such as PUCCH and PDSCH and signalling names, such as DCI and UCI, which are typically used in connection with current 3GPP wireless communications networks. However, it will be appreciated this is only for convenience, and in general the approaches discussed herein are applicable for other service types and in wireless communications networks which use different terminology. Thus, references herein to PUCCH should, unless the context demands otherwise, be read as referring to a physical uplink control channel generally, and not specifically to a particular format of physical uplink control channel, and so on for other channels and terminology that may be referred to herein.

As will be appreciated, resources of a wireless access interface comprise a grid of communications resources (i.e. a radio frame structure) spanning frequency and time. The frequency dimension is divided into sub-carriers and the time dimension is divided into OFDM symbols that are grouped into slots and sub-slots.

### Dynamic Grant PDSCH

As explained above, embodiments are related to the handling of HARQ feedback in respect of PDSCH resources of a wireless access interface provided by the wireless communications network. One way of providing PDSCH resources for downlink transmissions is by dynamic grant PDSCH. In a Dynamic Grant Physical Downlink Shared Channel (DG-PDSCH), a PDSCH resource is dynamically indicated by a gNB using a downlink Grant carried by Downlink Control Information (DCI) in a Physical Downlink Control Channel (PDCCH).

A PDSCH is transmitted using HARQ transmission, where for a PDSCH ending in slot *n,* the corresponding Physical Uplink Control Channel (PUCCH) carrying the HARQ-ACK is transmitted in slot *n+K*₁*.* In Dynamic Grant PDSCH, the value of *K*₁ is indicated in field "*PDSCH-to-HARQ_feedback timing indicator"* of the DL Grant (carried by DCI Format 1_0, DCI Format 1_1 or DCI Format 1_2). Multiple, different PDSCHs can point to the same slot for transmission of their respective HARQ-ACKs. The HARQ-ACKs to be transmitted in the same slot are multiplexed into a single PUCCH. Hence, a PUCCH can contain multiple HARQ-ACKs for multiple PDSCHs.

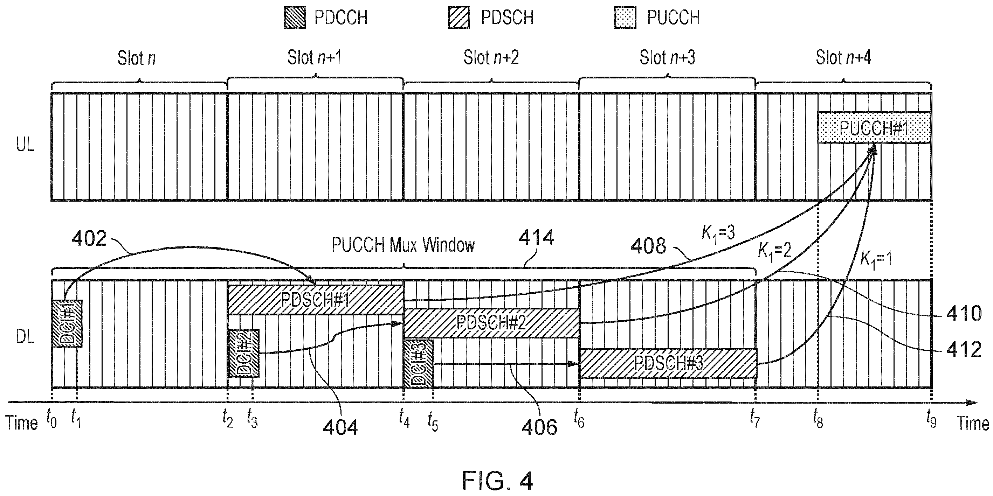

An example of multiplexing multiple HARQ-ACKs is schematically shown on radio communications grids in Figure 4. The upper half of Figure 4 represents an uplink radio resource grid comprising communications resources for uplink transmissions, and the bottom half of Figure 4 represents a downlink radio resource grid comprising communications resources for downlink transmissions. The horizontal axis is time and the vertical axis is frequency. Figure 4 represents an example scenario in which communications resources are utilised by a communications device 4, 14 during a period spanning five slots. The five slot period spans slots n to n+4. In slot n, the communications device 4, 14 receives a first DCI labelled "DCI#1". As represented by arrow 402, DCI#1 indicates an allocation of communication resources for transmitting a first physical downlink shared channel, labelled "PDSCH#1", in slot n+1. A PDSCH-to-HARQ feedback timing indicator in DCI#1 has a value of K₁ = 3. As represented by arrow 408, the value of K₁ = 3 indicates slot n+4 for transmitting a HARQ-ACK in respect of PDSCH#1. In slot n+1, the communications device 4, 14 receives a second DCI labelled "DCI#2". As represented by arrow 404, DCI#2 indicates an allocation of communication resources for transmitting a second physical downlink shared channel, labelled PDSCH#2, in slot n+2. A PDSCH-to-HARQ_feedback timing indicator in DCI#2 has a value of K₁ = 2. As represented by arrow 410, the value of K₁ = 2 indicates slot n+4 for transmitting a HARQ-ACK in respect of PDSCH#2. In slot n+2, the communications device 4, 14 receives a third DCI labelled "DCI#3". As represented by arrow 406, DCI#3 indicates an allocation of communication resources for transmitting a third physical downlink shared channel, labelled PDSCH#3, in slot n+3. A PDSCH-to-HARQ_feedback timing indicator has a value of K₁ = 1 which therefore indicates slot n+4 for transmitting a HARQ-ACK in respect of PDSCH#3 as represented by arrow 412. Thus, as represented by respective arrows 408, 410, 412, the HARQ-ACKs for each of the three downlink transmissions on the physical downlink shared channel are scheduled to be transmitted by the communications device 4, 14 in a first uplink control channel, labelled PUCCH#1, in slot n+4. The HARQ-ACKs for each of the three downlink transmissions are therefore transmitted in a multiplexed manner. To support this multiplexed HARQ-ACK function, a Multiplexing Window may be defined. The Multiplexing Window is a time window indicating how many PDSCHs can have their associated HARQ-ACK signalling multiplexed in PUCCH in a single slot and may depend on the range of K₁ values. In the example in Figure 4, the PUCCH Multiplexing Window 414 is assumed to be from slot n to slot n+3, which means the max K₁ value that can be used in this period is 4.

As explained above, a DCI may include a "*PDSCH-to-HARQ_feedback timing indicator"* providing a K₁ value which indicates a slot for transmitting a HARQ-ACK in respect of a PDSCH scheduled by the DCI. As will be appreciated by one skilled in the art, the DCI may also include a *"PUCCH Resource Indicator"* (PRI) field which indicates communications resources within the slot indicated by the value of K₁ for transmitting the HARQ-ACK in respect of the PDSCH scheduled by the DCI. In the example represented in Figure 4, only one PUCCH is indicated for the communications device 4, 14 in slot n+4 (i.e. PUCCH#1). For wireless communications networks operating in accordance with Release 15 of the 3GPP standards, only one PUCCH per slot is allowed to carry HARQ-ACKs for the same communications device even if PUCCHs in the same slot do not overlap in time. For example, if a PRI field in two different downlink grants indicate two different PUCCH resources in the same slot, the communications device will follow the PRI indicated in the last PDSCH in the PUCCH Multiplexing Window since the communications device only knows the total number of HARQ-ACK bits after the last PDSCH is received.

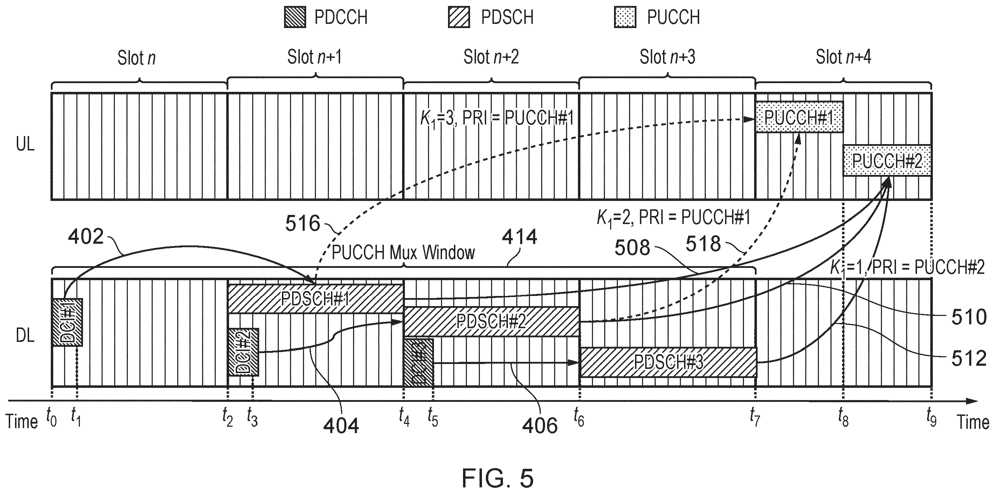

An example of two non-overlapping PUCCH resources being scheduled in the same slot is illustrated in Figure 5. Figure 5 is similar to, and will be understood from, Figure 4, but this example schematically illustrates a scenario in which two PUCCH resources are indicated in the same slot. In the interests of brevity, only the differences between Figures 4 and 5 will be explained.

As represented by dashed arrow 516, a PRI field in DCI#1 indicates communications resources in PUCCH#1 in slot n+4 for transmitting a HARQ-ACK in respect of PDSCH#1. As represented by dashed arrow 518, a PRI field in DCI#2 also indicates communications resources in PUCCH#1 in slot n+4 for transmitting a HARQ-ACK in respect of PDSCH#2. As represented by arrow 512, a PRI field in DCI#3 indicates communications resources in a second physical uplink control channel labelled "PUCCH#2" in slot n+4 for transmitting a HARQ-ACK in respect of PDSCH#3.

Thus, as represented by respective dashed arrows 516 and 518, the HARQ-ACK for each of PDSCH#1 and PDSCH#2 are respectively scheduled to be transmitted by the communications device in slot n+4 using PUCCH#1, and, as represented by arrow 512, the HARQ-ACK for PDSCH#3 is scheduled to be transmitted by the communications device in slot n+4 using PUCCH#2. In this example, PUCCH#1 and PUCCH#2 do not overlap in time. Since DCI#3 schedules the last PDSCH in the Multiplexing Window 414 (i.e. PDSCH#3), the communications device 4, 14 will use the communications resources indicated by DCI#3 to transmit a HARQ-ACK in respect of PDSCH#1, 2 and 3. For example, as represented by respective arrows 508, 510 and 512, the communications device 4, 14 uses PUCCH#2 to carry the HARQ-ACKs for PDSCH#1 and PDSCH#2 and PDSCH#3. It will be appreciated that a PUCCH carrying other uplink control information such as Scheduling Request (SR) can be transmitted separately to a PUCCH carrying HARQ-ACK within the same slot if they do not overlap in time.

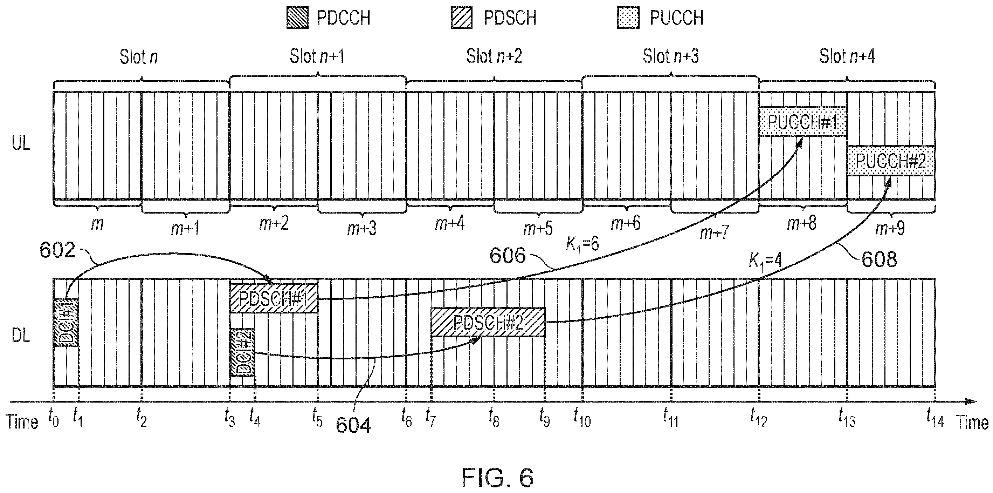

For Release 16 of the 3GPP standards, the possibility of sub-slot operation for HARQ-ACK acknowledgement signalling was introduced. Sub-slot operation for HARQ-ACK allows the timings of HARQ-ACK uplink control information on PUCCH to be configured with a resolution or granularity which is less than one slot. In other words, the HARQ-ACK process operates with sub-slot timing granularity. Sub-slot based PUCCH thus allows more than one PUCCH carrying HARQ-ACKs to be transmitted within a slot. This provides for more opportunities for PUCCH carrying HARQ-ACK in respect of PDSCH transmissions to be transmitted within a slot, thereby potentially helping to reduce the latency of HARQ-ACK. In a sub-slot based PUCCH, the granularity of the K₁ parameter is in units of sub-slot instead of slot, where the sub-slot size can be 2 symbols or 7 symbols. It will be appreciated that the K₁ parameter indicates the time difference between the end of a PDSCH and the start of its corresponding PUCCH. An example of sub-slot HARQ-ACK operation is shown in Figure 6.

Figure 6 is similar to, and will be understood from, Figure 4, but this example schematically illustrates a scenario that supports sub-slot operation for HARQ-ACK with a sub-slot size of 7 symbols, which is half a slot length in this case. Thus Figure 6 schematically shows communication resources used by the communications device 4, 14 in an example scenario during a period spanning five slots or ten sub-slots. The five slots are labelled as slots n to n+4 and the 10 sub-slots are labelled as sub-slots m to m+9. In sub-slot m, the communications device 4, 14 receives a first DCI labelled "DCI#1". As represented by arrow 602, DCI#1 indicates an allocation of communication resources on a first PDSCH, labelled PDSCH#1, in sub-slot m+2 with a PDSCH-to-HARQ_feedback timing indicator value of K₁ = 6. Therefore, as represented by arrow 606, DCI#1 indicates communications resources of a first physical uplink control channel labelled "PUCCH#1" in sub-slot m+8 for transmitting a HARQ-ACK in respect of PDSCH#1. As represented by arrow 604, DCI#2 indicates an allocation of communications resources on a second PDSCH, labelled PDSCH#2, that spans sub-slots m+4 and m+5 with a PDSCH-to-HARQ_feedback timing indicator value of K₁ = 4. Therefore, as represented by arrow 608, DCI#2 indicates communications resources of a second physical uplink control channel labelled "PUCCH#2" in sub-slot m+9 for transmitting a HARQ-ACK in respect of PDSCH#2. In a sub-slot based operation such as the operation explained with respect to Figure 6, a communications device can transmit two PUCCH carrying HARQ-ACK (i.e. PUCCH#1 and PUCCH#2) in the same slot. This contrasts with approaches according to Release 15 of the 3GPP standards specification series, where only one PUCCH carrying HARQ-ACK is allowed in a slot.

### Semi-Persistent Scheduling (SPS)

As explained above, PDSCH resources used for the transmission of a PDSCH can be scheduled by a gNB dynamically in dynamic grant PDSCH. Another way of providing PDSCH resources for downlink transmissions is through the allocation of Semi-Persistent Scheduling (SPS) resources.

Similarly, to the use of Configured Grants (CGs) in the uplink, the use of SPS in the downlink reduces latency, particularly for regular and periodic traffic. The gNB is required to explicitly activate and deactivate SPS resources when it determines they may be required. These SPS resources are typically configured via Radio Resource Control (RRC) signalling, and occur periodically where each SPS PDSCH occasion has a pre-configured and fixed duration. This allows the gNB to schedule traffic that has a known periodicity and packet size. The gNB may or may not transmit any PDSCH in any given SPS PDSCH occasion, and so the communications device is required to monitor each SPS PDSCH occasion for a potential PDSCH transmission.

In Release 15 of the 3GPP standards, the communications device can only be configured with one SPS PDSCH and this SPS PDSCH is activated using an activation DCI (Format 1_0 or 1_1) with the Cyclic Redundancy Check (CRC) scrambled with a Configured Scheduling Radio Network Temporary Identifier (CS-RNTI). Once an SPS PDSCH is activated, the communications device will monitor for a potential PDSCH in each SPS PDSCH occasion of the SPS PDSCH configuration without the need for any DL Grant until the SPS PDSCH is deactivated. Deactivation of the SPS PDSCH is indicated via a deactivation DCI scrambled with CS-RNTI. The communications device provides a HARQ-ACK for the deactivation DCI, but no HARQ-ACK is provided for an activation DCI.

Similar to DG-PDSCH, the slot containing the PUCCH resource for HARQ-ACK corresponding to SPS PDSCH is indicated using the *K*₁ value in the field "*PDSCH-to-HARQ_feedback timing indicator"* of the activation DCI. Since a dynamic grant is not used for SPS PDSCH, this *K*₁ value is applied for every SPS PDSCH occasion, and can only be updated after it has been deactivated and re-activated using another activation DCI with a different *K*₁ value.

Since there is only one SPS PDSCH, PUCCH Format 0 or 1 is used to carry the HARQ-ACK. If the PUCCH collides with a PUCCH carrying HARQ-ACK for a DG-PDSCH, the HARQ-ACK for SPS PDSCH is multiplexed into the PUCCH corresponding to the DG-PDSCH.

In Release 16 of the 3GPP standards, the communications device can be configured with up to eight SPS PDSCHs, where each SPS PDSCH has an SPS Configuration Index that is RRC configured. Each SPS PDSCH is *individually* activated using a DCI (Format 1_0, 1_1 & 1_2) with the CRC scrambled with CS-RNTI, where the DCI indicates the SPS Configuration Index of the SPS PDSCH to be activated. However, multiple SPS PDSCHs can be deactivated using a single deactivation DCI. Similar to Release 15 of the 3GPP standards, the communications device provides a HARQ-ACK for the deactivation DCI, but does not provide one for the activation DCI.

The slot or sub-slot containing the PUCCH resource for HARQ-ACK corresponding to an SPS PDSCH occasion is determined using the *K*₁ value indicated in the activation DCI. Since each SPS PDSCH configuration is individually activated, different SPS PDSCH can be indicated with different *K*₁ values.

Since different K₁ values can be used for different SPS PDSCH configurations, it is possible that the HARQ-ACK for multiple SPS PDSCHs point to the same slot or sub-slot and in such a scenario, these HARQ-ACKs are multiplexed into a single PUCCH. For multiple SPS PDSCH configurations, PUCCH Format 2, 3 & 4 (in addition to PUCCH Format 0 & 1) can be used to carry multiple HARQ-ACKs for SPS PDSCH. Here the HARQ-ACKs in the PUCCH are sorted in ascending order according to the DL slot for each of the SPS PDSCH Configuration Indices and then sorted in ascending order of the SPS PDSCH Configuration Index. It will be appreciated that, since typically the K₁ value is fixed per SPS PDSCH then it is unlikely to have two or more SPS PDSCHs with the same index multiplexed into a PUCCH.

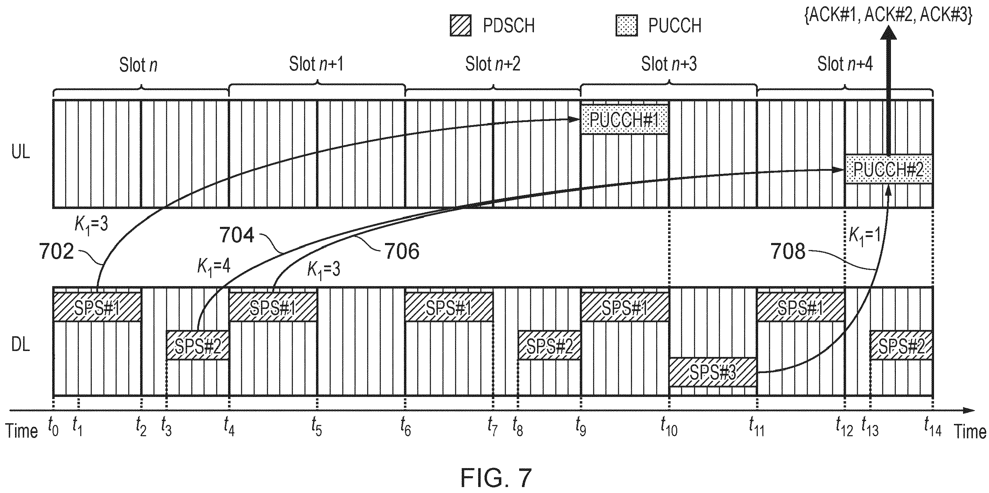

An example of HARQ-ACK transmission for multiple SPS PDSCHs on a grid of communications resources is schematically shown in Figure 7. In Figure 7, a communications device is configured with three SPS PDSCHs labelled as SPS#1, SPS#2 and SPS#3. As shown, each of the SPS#1, SPS#2 and SPS#3 have different periodicities which are RRC configured with SPS Configuration Index 1, 2 and 3 respectively. SPS#1, SPS#2 and SPS#3 are activated with K₁=3, K₁=4 and K₁=1 respectively. As such, and as represented by respective arrows 704, 706 and 708, the HARQ-ACKs for SPS#2 in slot n, SPS#1 in slot n+1 and SPS#3 in slot n+3 are transmitted in the same slot, i.e. carried by PUCCH#2, in slot n+4. PUCCH#2 therefore provides three HARQ-ACKs labelled as {ACK#1, ACK#2, ACK#3} for SPS#1, SPS#2 and SPS#3 respectively according to their SPS PDSCH Configuration Indices. In this example, there is only one unique SPS PDSCH per DL slot that have HARQ-ACK multiplexed into PUCCH#2.

When the PUCCH for SPS PDSCHs collides with PUCCH for DG-PDSCH, the HARQ-ACK for the SPS PDSCH and the DG-PDSCH are multiplexed. In such cases, the HARQ-ACK for the SPS PDSCH is appended after the HARQ-ACK for DG-PDSCH.

### Uplink L1 Priority

In Release 15 of the 3GPP standards, no priority levels were defined at the Physical Layer for when two uplink transmissions collide. Instead, the information contained in the uplink transmissions is multiplexed and transmitted using a single channel. As will be appreciated, possible uplink transmission collisions include collisions between PUCCH and PUCCH or between PUCCH with PUSCH. However, physical layer priority levels are not to be confused with Logical Channel Priority levels which have been defined for the MAC layer in Release 15, where there are 16 priority levels.

A UE can be configured to provide eMBB and URLLC services. Since eMBB and URLLC have different latency requirements, their uplink transmissions may collide. For example, after an eMBB uplink transmission has been scheduled, an urgent URLLC packet arrives which would need to be scheduled immediately and transmission may collide with the eMBB transmission. In order to handle such intra-UE collisions with different latency and reliability requirements, two priority levels at the *Physical Layer* were introduced in Release 16 of the 3GPP standards for *uplink transmissions.* These priority levels apply for the PUCCH and PUSCH. For example, a high priority PUCCH could take precedence over a low priority PUSCH; or a high priority PUSCH could take precedence over a low priority PUCCH; or a high priority PUCCH could take precedence over a low priority PUCCH etc). Therefore, according to Release 16, when two uplink transmissions *with different Physical Layer priority levels* (L1 priority) collide, the UE will drop the lower priority transmission. If both uplink transmissions have the same L1 priority, then the UE reuses Release 15 procedures, for example, by multiplexing the uplink transmissions which have the same L1 priority in the same channel. The gNB indicates the L1 priority to the UE in a1 bit *"Priority indicator"* DCI field, where "0" indicates low L1 priority (LP) and "1" indicates high L1 priority (HP) and:
- For PUSCH, the L1 priority is indicated in the UL Grant carried by DCI Format 0_1 and 0_2
- For PUCCH carrying a HARQ-ACK for PDSCH, the L1 priority is indicated in the DL Grant scheduling a PDSCH, carried by DCI Format 1_1 and 1_2

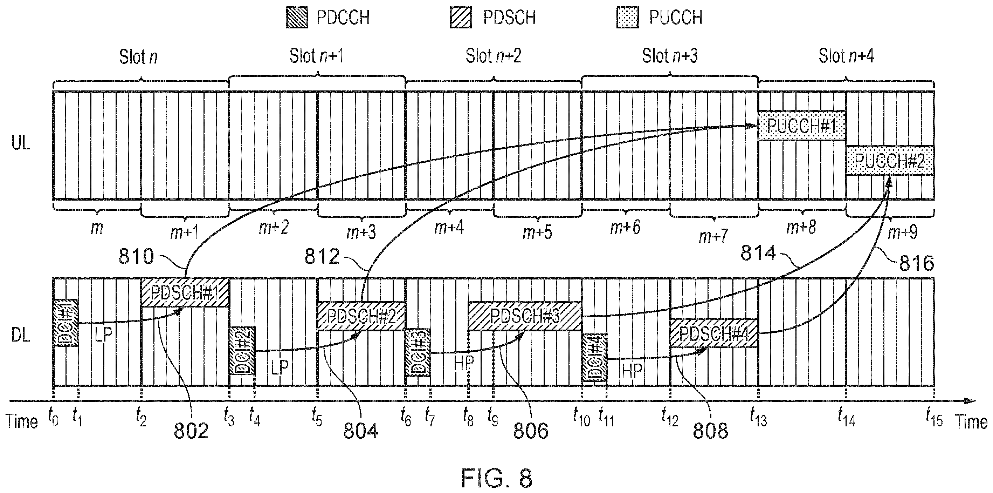

Since the PUCCH can have two L1 priorities, two HARQ-ACK codebooks of different priorities can be configured for a UE. This allows high L1 priority HARQ-ACKs to be multiplexed into a high L1 priority HARQ-ACK codebook and low L1 priority HARQ-ACKs to be multiplexed into a low L1 priority HARQ-ACK codebook. An example of multiplexing high L1 priority HARQ-ACKs in a high L1 priority HARQ-ACK codebook and multiplexing low priority HARQ-ACKs in a low L1 priority HARQ-ACK codebook is illustrated in Figure 8.

In Figure 8, the communications device 4, 14 receives first DCI labelled "DCI#1" which, as represented by arrow 802, indicates an allocation of communications resources for transmitting a first physical downlink shared channel labelled "PDSCH#1". As represented by arrow 810, DCI#1 indicates a first physical uplink control channel labelled "PUCCH#1" in sub-slot m+8 for transmitting a HARQ-ACK in respect of PDSCH#1. As shown in Figure 8, the HARQ-ACK for PDSCH#1 is a low L1 priority HARQ-ACK. The communications device 4, 14 receives a second DCI labelled "DCI#2" which, as represented by arrow 804, indicates an allocation of communications resources for transmitting a second physical downlink shared channel labelled "PDSCH#2". As represented by arrow 812, DCI#2 indicates PUCCH#1 in sub-slot m+8 for transmitting a HARQ-ACK in respect of PDSCH#2. As shown in Figure 8, the HARQ-ACK for PDSCH#2 is a low L1 priority HARQ-ACK. The communications device 4, 14 receives third DCI labelled "DCI#3" which, as represented by arrow 806, indicates an allocation of communications resources for transmitting a third physical downlink shared channel labelled "PDSCH#3". As represented by arrow 814, DCI#3 indicates a second physical uplink control channel labelled "PUCCH#2" in sub-slot m+9 for transmitting a HARQ-ACK in respect of PDSCH#3. As shown in Figure 8, the HARQ-ACK for PDSCH#3 is a high L1 priority HARQ-ACK. The communications device 4, 14 receives fourth DCI labelled "DCI#4" which, as represented by arrow 808, indicates an allocation of communications resources for transmitting a fourth physical downlink shared channel labelled "PDSCH#4". As represented by arrow 816, DCI#4 indicates PUCCH#2 in sub-slot m+9 for transmitting a HARQ-ACK in respect of PDSCH#4. As shown in Figure 8, the HARQ-ACK for PDSCH#4 is a high L1 priority HARQ-ACK.

The PUCCH#1 in sub-slot m+8 carries a low L1 priority HARQ-ACK codebook to multiplex the HARQ-ACKs for PDSCH#1 and PDSCH#2. The PUCCH#2 in sub-slot m+9 carries a high L1 priority HARQ-ACK codebook to multiplex the HARQ-ACKs for PDSCH#3 and PDSCH#4. Therefore, different PUCCH transmissions that have different reliabilities can be configured to carry HARQ-ACKs with different L1 priorities.

As explained above, a PUCCH or PUSCH carrying HARQ-ACKs for PDSCHs may be cancelled due to intra-UE L1 prioritisation due to a collision with a higher priority PUCCH or PUSCH. Additionally, a PUCCH/PUSCH transmission can be cancelled by an Uplink Cancellation Indicator. As will be appreciated, uplink inter-UE prioritisation is where a low priority uplink transmission for one UE collides with another, higher priority uplink transmission for another UE. In such cases, the wireless communications network (for example, an infrastructure equipment in the wireless communications network such as a gNB) may transmit an uplink cancellation indicator to the UE with the lower priority uplink transmission. In response, the UE which receives the uplink cancellation indicator cancels the lower priority uplink transmission.

In Time Division Duplexing (TDD), a PUCCH for SPS PDSCH can also be cancelled if it collides with downlink symbols or invalid symbols.

### 1-shot ReTx

As will be appreciated, a cancelled PUCCH that contains multiple HARQ-ACKs may lead to the retransmission of multiple PDSCHs even if the UE has already successfully decoded some of the PDSCHs. For example, the cancelled PUCCH may contain a HARQ-ACK for PDSCHs which have already been successfully decoded by the UE. However, since the gNB does not receive the cancelled PUCCH, it is not aware of the decoding status of any of the PDSCH for which a HARQ-ACK was to be transmitted in a cancelled PUCCH. Therefore, the cancellation of a PUCCH containing HARQ-ACKs for multiple PDSCHs may lead to communications resource wastage. Accordingly, in Release 17 of the 3GPP standards for URLLC, a new 1-shot DCI trigger for HARQ-ACK retransmissions was introduced. A retransmission that is triggered by the 1-shot trigger will be referred to herein as the "1-shot ReTx". For example, the 1-shot ReTx may be a HARQ-ACK Codebook which carries one or more HARQ-ACKs. As will be explained below, a PUCCH may carry the 1-shot ReTx.

The 1-shot ReTx is triggered using a 1-shot trigger in a downlink grant (such as a DCI). The 1-shot ReTx retransmits the HARQ-ACKs carried by a previously scheduled PUCCH which may have been cancelled for example. In order to indicate to the communications device 4, 14 which previous PUCCH contains the HARQ-ACKs to be retransmitted, the DCI includes an offset. The offset represents an offset in time between either the DCI including the 1-shot trigger and the previous PUCCH containing the HARQ-ACKs to be re-transmitted or an offset in time between a PUCCH which is scheduled by the DCI containing the 1-shot trigger to retransmit the HARQ-ACKs and the previous PUCCH containing the HARQ-ACKs to be retransmitted. In either case, the offset is measured relative to the previous PUCCH containing the HARQ-ACKs to be retransmitted which will be referred to herein as a "target PUCCH". The offset included in the 1-shot trigger may therefore be referred to an "offset to the target PUCCH".

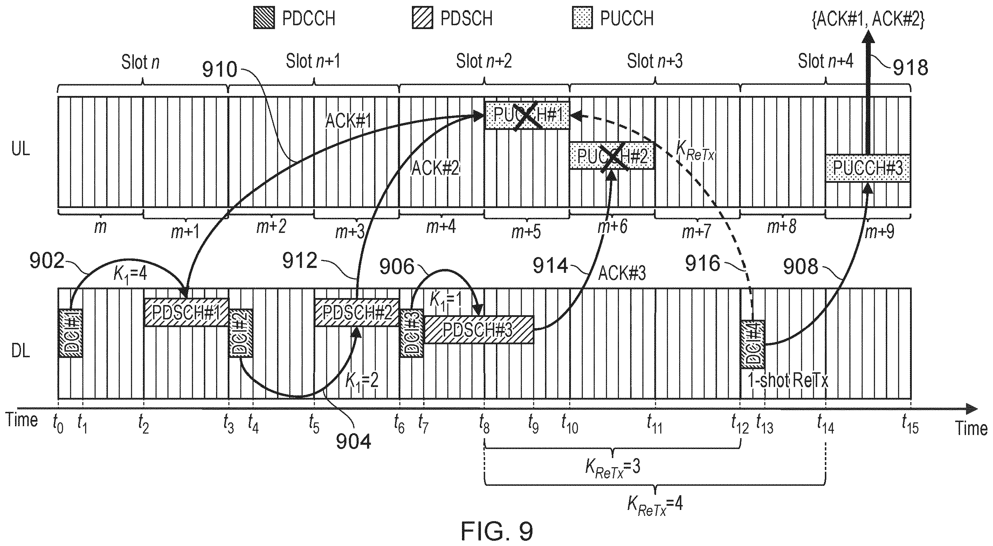

An example of a 1-shot trigger indicating a PUCCH for HARQ-ACK retransmission is shown in Figure 9. In Figure 9, the communications device 4, 14 receives a first DCI labelled "DCI#1" which, as represented by arrow 902, indicates an allocation of communications resources for transmitting a first physical downlink shared channel labelled "PDSCH#1" in sub-slot m+1. As represented by arrow 910, DCI#1 indicates a first physical uplink control channel labelled "PUCCH#1" in sub-slot m+5 for transmitting a HARQ-ACK labelled "ACK#1" in respect of PDSCH#1. In this case, the K₁ parameter in DCI#1 has a sub-slot based granularity. The value of K₁ for DCI#1 is four sub-slots. The communications device 4, 14 receives a second DCI labelled "DCI#2" which, as represented by arrow 904, indicates an allocation of communications resources for transmitting a second physical downlink shared channel labelled "PDSCH#2" in sub-slot m+3. As represented by arrow 912, DCI#2 indicates PUCCH#1 in sub-slot m+5 for transmitting a HARQ-ACK labelled "ACK#2" in respect of PDSCH#2. In this case, the K₁ parameter in DCI#2 has a sub-slot based granularity. Therefore, the value of K₁ for DCI#2 is two sub-slots. The communications device 4, 14 receives a third DCI labelled "DCI#3" which, as represented by arrow 906, indicates an allocation of communications resources for transmitting a third physical downlink shared channel labelled "PDSCH#3" spanning sub-slot m+4 and m+5. As represented by arrow 914, DCI#3 indicates a second physical uplink control channel labelled "PUCCH#2" in sub-slot m+6 for transmitting a HARQ-ACK labelled "ACK#3" in respect of PDSCH#3. In this case, the K₁ parameter in DCI#3 has a sub-slot based granularity. The value of K₁ for DCI#3 is one sub-slot. Although not shown in Figure 9, the communications device 4, 14 may receive an uplink cancellation indicator from a wireless communications network to cancel PUCCH#1 and PUCCH#2. For example, both PUCCH#1 and PUCCH#2 may collide with other uplink transmissions from other communications devices (not shown in Figure 9), and the wireless communications network instructs the communications device 4, 14 to cancel PUCCH#1 and PUCCH#2 because, for example, PUCCH#1 and PUCCH#2 have a lower priority than the uplink transmissions from the other communications devices.

In sub-slot m+8, the communications device 4, 14 receives a fourth DCI, labelled "DCI#4". DCI#4 includes a 1-shot trigger which, as represented by dashed arrow 916, instructs the communications device 4, 14 to retransmit the HARQ-ACKs carried by PUCCH#1 which is therefore identified as the target PUCCH. As shown by arrow 908, DCI#4 indicates a third physical uplink control channel labelled "PUCCH#3" for retransmitting the HARQ-ACKs carried by PUCCH#1. The transmission of the HARQ-ACKS in PUCCH#3 is represented by arrow 918. In this example, PUCCH#3 carries the 1-shot ReTx.

As will be appreciated, a 1-shot ReTx can only transmit HARQ-ACKs which were carried by a single PUCCH. For example, PUCCH#3 can either retransmit the HARQ-ACKs carried by PUCCH#1 or the HARQ-ACK carried by PUCCH#2 but not both. Therefore DCI#4 indicates to the communications device 4,14 which of PUCCH#1 or PUCCH#2 are to act as the target PUCCH by using an offset, *K_{ReTx,}* as mentioned above.

It has been proposed [5] that the offset *K_{ReTx}* should be an offset relative to the DCI which includes the 1-shot trigger. For example, in Figure 9, *K_{ReTx}=*3 represents an offset of three sub-slots measured between DCI#4 and the target PUCCH which in this case is PUCCH#1.

It has been alternatively proposed [6] that the offset *K_{ReTx}* is an offset relative to the PUCCH scheduled by the DCI which includes the 1-shot trigger to retransmit the HARQ-ACKs carried by the target PUCCH. For example, in Figure 9, *K_{ReTx}=4* represents an offset of four sub-slots measured between PUCCH#3 and the target PUCCH which in this case is PUCCH#1.

For the purpose of providing illustrative examples, the offset *K_{ReTx}* will herein after be considered an offset between the DCI which includes the 1-shot trigger and the target PUCCH. It will be appreciated from the above explanations that this is an example and alternative definitions of the start or end points of the offset *K_{ReTx}* can be used.

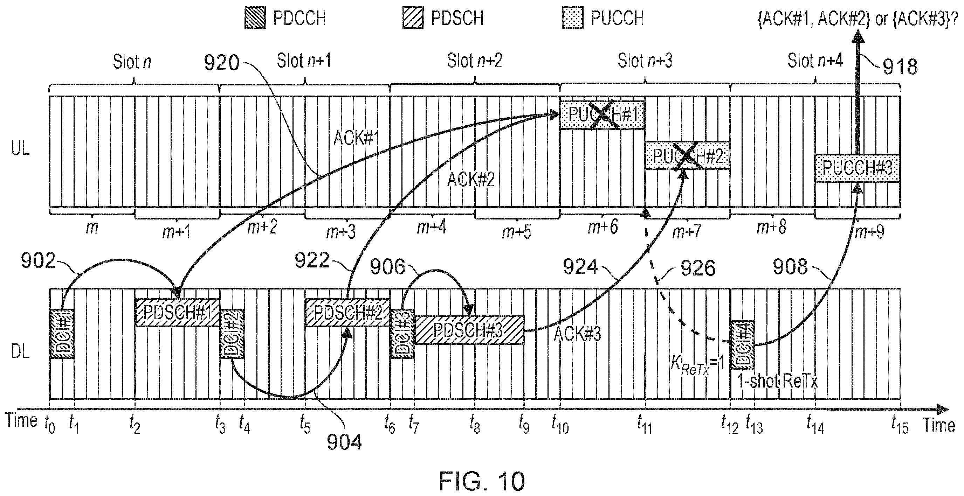

Although Figure 9 has been described where the granularity of the offset *K_{ReTx}* is sub-slot based, it is possible for the granularity of the offset *K_{ReTx}* to be slot based. For example, a value of *K_{ReTx}=*3 is interpreted as 3 sub-slots in a sub-slot based granularity but is interpreted as 3 slots in a slot-based granularity. In either case, it is possible that the slot or sub-slot indicated by the ReTx contains two or more PUCCHs. As will be explained in more detail below, if the granularity of the offset *K_{ReTx}* is slot-based and the slot indicated by the offset *K_{ReTx}* includes two or more PUCCH, or if the granularity of the offset *K_{ReTx}* is sub-slot based and the sub-slot indicated by the offset *K_{ReTx}* includes two or more PUCCH, then ambiguity may arise as to which target PUCCH has been indicated by the 1-shot trigger since the 1-shot ReTx can only retransmit the HARQ-ACK(s) of a single PUCCH. An example is shown in Figure 10.

Figure 10 is based on, and will be understood from, Figure 9. Only the differences between Figures 9 and 10 will be explained in the interests of brevity. As represented by arrow 920, DCI#1 indicates PUCCH#1 in slot n+3 for transmitting a HARQ-ACK in respect of PDSCH#1. In this case, the granularity of K₁ in DCI#1 is slot-based. The value of K₁ for DCI#1 is therefore three slots. As represented by arrow 922, DCI#2 indicates PUCCH#1 in slot n+3 for transmitting a HARQ-ACK in respect PDSCH#2. In this case, the granularity of K₁ in DCI#2 is slot-based. Therefore, the value of K₁ for DCI#2 is two slots. As represented by arrow 924, DCI#3 indicates PUCCH#2 in sub-slot m+7 for transmitting a HARQ-ACK in respect of PDSCH#3. In this case, the granularity of K₁ in DCI#3 is sub-slot based. Therefore, the value of K₁ in DCI#3 is two sub-slots. Although not shown in Figure 10, the communications device 4, 14 may receive an uplink cancellation indicator from a wireless communications network to cancel PUCCH#1 and PUCCH#2.

As previously explained, DCI#4 indicates which of PUCCH#1 and PUCCH#2 is the target PUCCH by using the offset *K_{ReTx}.* As represented by arrow 926, the offset *K_{ReTx}* in DCI#4 has a slot-based granularity. In particular, the offset *K_{ReTx}* has a value of one slot which indicates to the communications device 4, 14 to retransmit HARQ-ACKs in slot n+4. However, as shown in Figure 10, slot n+3 includes both PUCCH#1 and PUCCH#2 and, as explained above, PUCCH#3 can only retransmit the HARQ-ACKs carried by either PUCCH#1 or PUCCH#2. An ambiguity therefore arises as to which of the PUCCH#1 or PUCCH#2 is the target PUCCH. It will be appreciated that an analogous ambiguity can arise in cases where the offset *K_{ReTx}* has a sub-slot based granularity, and PUCCH#1 and PUCCH#2 are in the same sub-slot.

3GPP have agreed on indicating the slot/sub-slot containing the target PUCCH. However, cases in which the indicated slot/sub-slot contains more than one possible target PUCCH have not been addressed.

If a communications device is unable to uniquely or unambiguously identify a single target PUCCH in a particular slot or sub-slot, then the communications device may not be able to determine which PUCCH it should transmit/retransmit or the communications device may transmit/retransmit the incorrect PUCCH. It will be appreciated that such scenarios may thereby lead to communications resource wastage.

There is therefore a need for improved communications devices and infrastructure equipment which can more accurately identify feedback to be retransmitted which may lead to improved communications resource utilisation efficiency.

In view of the above, embodiments can provide a method of operating a communications device to receive data from a wireless communications network. The communications device receives a plurality of downlink transmissions in physical downlink shared channel resources forming part of communications resources of a wireless access interface provided by the wireless communications network. The communications resources are divided in time into a plurality of time resource units such as slots or sub-slots. Each of the plurality of downlink transmissions is a transmission of a data unit according to a different Hybrid Automatic Repeat Request, HARQ, type process. The communications device determines a HARQ acknowledgement or negative acknowledgement, HARQ-ACK, for each of the plurality of received downlink transmissions in accordance with whether the data unit for the HARQ type process was correctly received or not. The communications device identifies communications resources of the wireless access interface for transmitting a physical uplink control channel associated with each of the plurality of downlink transmissions. The communications resources of the physical uplink control channel are identified for transmitting the HARQ-ACKs for the plurality of received downlink transmissions as a plurality of uplink control messages. After a time when the plurality of uplink control messages are identified for transmission, the communications device receives a trigger as a downlink control message from the wireless communications network to transmit or to retransmit a targeted one of the plurality of uplink control messages in one or more subsequent time resource units of the communications resources of the wireless access interface indicated by the trigger. The targeted uplink control message is indicated using a fine indicator comprising a temporal offset identifying one of the plurality of time resource units which includes the targeted uplink control message. In response to the trigger, the communications device transmits or retransmits the targeted uplink control message carrying one or more of the HARQ-ACKs.

The downlink control messages may be transmitted in downlink control information from the wireless communications network, and the trigger may correspond to a 1-shot trigger in some embodiments. The communications device may determine a granularity of the temporal offset of the fine indicator. For example, the temporal offset may be indicated by the fine indicator in units of slot or sub-slot.

As will be explained in more detail below the "targeted" or "target" uplink control message may be selected for transmission or retransmission by the communications device. For example, the communications device may select a PUCCH as a target if the PUCCH was previously unsuccessfully transmitted by the communications device or previously unsuccessfully received by the wireless communications network.

In some embodiments, as will be explained in more detail below, the fine indicator is sufficient to identify the targeted uplink control message. However, in some embodiments, additional indicators and/or conditions are implemented to identify the targeted uplink control message.

### K_{ReTx} Granularity

In example embodiments, the target PUCCH offset *K_{ReTx}* uses the smallest granularity used for the *K*₁ offset. As explained above, the PUCCH can be slot or sub-slot based (2 OFDM symbols or 7 OFDM symbols) depending on the granularity of the *K*₁ parameter. Furthermore, it is possible for a UE to be configured with two HARQ-ACK Codebooks of different L1 priority. In this case, each HARQ-ACK codebook can use a different *K*₁ granularity. Therefore, in some example embodiments, the offset *K_{ReTx}* may use the smallest granularity among the configured HARQ-ACK Codebooks.

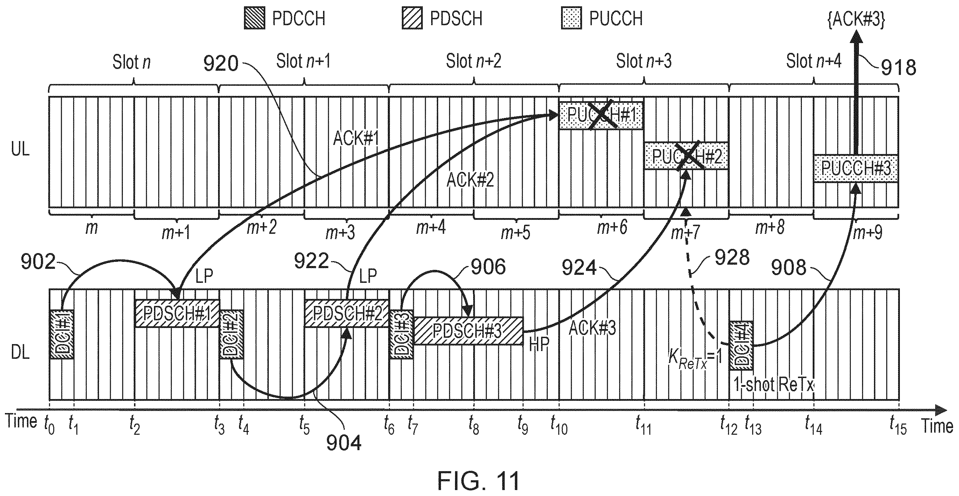

An example is shown in Figure 11, which is based on Figure 10. In Figure 11, PUCCH#1 is slot based and has a low L1 Priority whilst PUCCH#2 is sub-slot (7 OFDM symbols) based and has a high L1 Priority. Therefore, according to example embodiments, the granularity of the offset *K_{ReTx}* is based on the granularity of PUCCH#2 which in this case is a sub-slot based granularity and has the smallest value. Therefore, as represented by arrow 928 in Figure 11, the offset *K_{ReTx}=*1 refers specifically to sub-slot *m*+7 rather than generally to slot *n*+3, thereby identifying PUCCH#2 as the target PUCCH. Therefore the HARQ-ACK for PUCCH#2 (ACK#3) is transmitted in PUCCH#3.

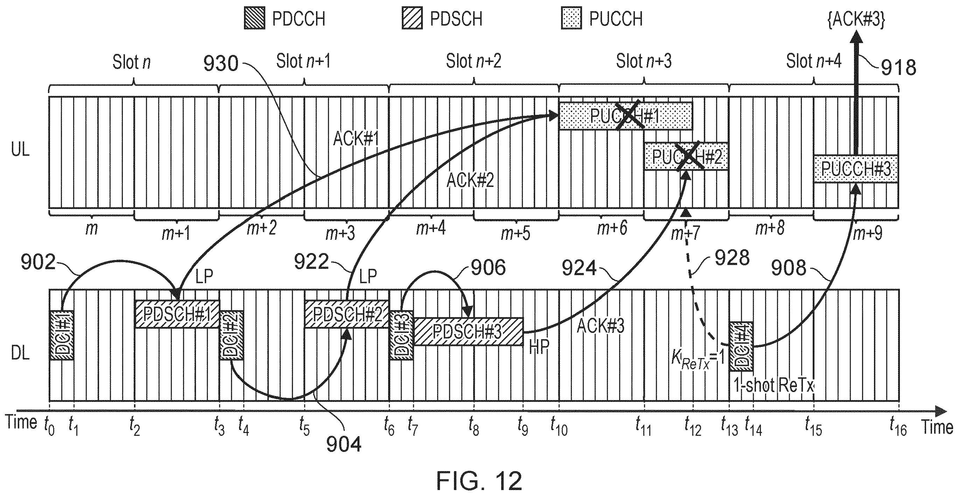

In some embodiments, where *K_{ReTx}* uses the finest *K*₁ granularity among the configured HARQ-ACK Codebooks, the target PUCCH is the PUCCH that starts in (or within) the slot or sub-slot indicated by the offset *K_{ReTx}.* An example is shown in Figure 12 which is based Figure 11 and so only the differences will be described for brevity. As represented by arrow 930, DCI#1 indicates a low priority PUCCH#1 in slot n+3 for transmitting a HARQ-ACK in respect of PDSCH#1. PUCCH#1 has a slot based granularity and the value of K₁ is three slots. However, in contrast to Figure 11, PUCCH#1 in Figure 12 extends into sub-slot m+7 which includes PUCCH#2. Therefore, in accordance with example embodiments, the offset *K_{ReTx}* granularity therefore uses the smallest granularity in the configured HARQ-ACKs codebooks. In this case, the offset *K_{ReTx}* uses the same granularity as PUCCH#2 which is sub-slot based. As shown by arrow 928, the offset *K_{ReTx}* with a value of one sub-slot indicates sub-slot m+7. However, as explained above, in Figure 12 sub-slot m+7 includes both PUCCH#1 and PUCCH#2. In accordance with example embodiments, the communications device 4, 14 determines that the target PUCCH is the PUCCH which starts in sub-slot m+7 which in this case is PUCCH#2.

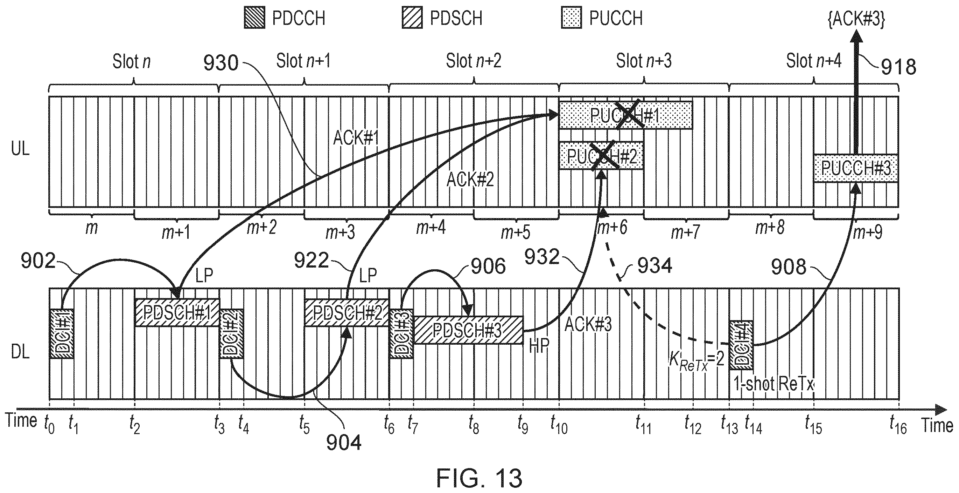

In some embodiments, where *K_{ReTx}* uses the finest *K*₁ granularity among the configured HARQ-ACK Codebooks, the target PUCCH is the PUCCH that ends in (or within) the slot or sub-slot indicated by the offset *K_{ReTx}.* An example is shown in Figure 13 which is based on Figure 12 and so only the differences will be described for brevity. As represented by arrow 932, DCI#3 indicates a high priority PUCCH#2 in sub-slot m+6 for transmitting a HARQ-ACK in respect of PDSCH#3. PUCCH#3 has a sub-slot based granularity and the value of K₁ in DCI#3 is one sub-slot. Therefore, in accordance with example embodiments, the offset *K_{ReTx}* granularity is the smallest granularity in the configured HARQ-ACKs codebooks. In this case, the offset *K_{ReTx}* uses the same granularity as PUCCH#2 which is sub-slot based. As shown by arrow 934, the offset *K_{ReTx}* with a value of 2 sub-slots indicates sub-slot m+6. However, in Figure 13, sub-slot m+6 includes both PUCCH#1 and PUCCH#2. In accordance with example embodiments, the communications device 4, 14 determines that the target PUCCH is the PUCCH which ends in sub-slot m+6 which in this case is PUCCH#2.

### Symbol Offset

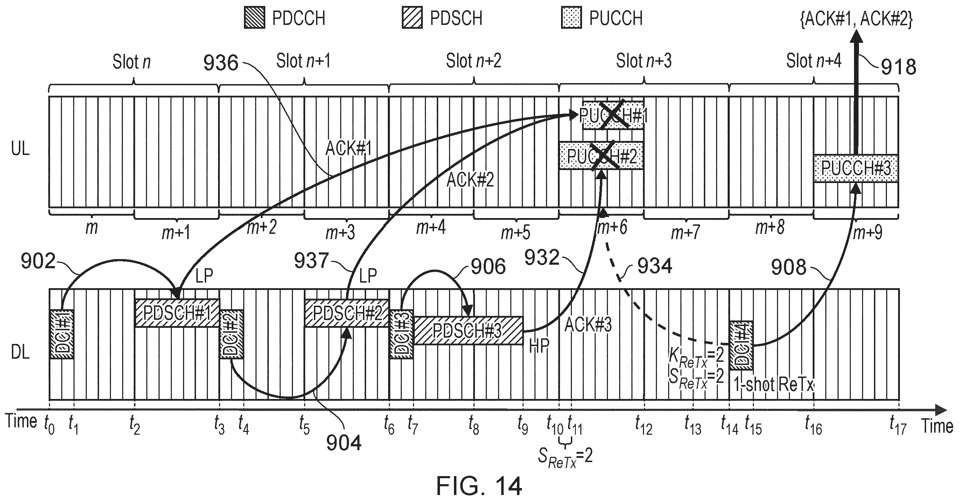

In some embodiments, the DCI which includes the 1-shot ReTx may include an indication of a symbol offset which represents a timing offset to the target PUCCH within the slot or sub-slot indicated by the offset *K_{ReTx}.* An example is shown in Figure 14. Figure 14 is based on Figure 13 and so only the differences will be described for brevity. As represented by arrow 936, DCI#1 indicates a low priority PUCCH#1 in sub-slot m+6 for transmitting an HARQ-ACK in respect of PDSCH#1. PUCCH#1 has a sub-slot based granularity and the value of K₁ in DCI#1 is five sub-slots. In contrast to Figure 13, the PUCCH#1 in Figure 14 has a starting point of two OFDM symbols after the start of slot n+3. Similarly, as represented by arrow 937, DCI#2 indicates a low priority PUCCH#1 in slot n+3 for transmitting an HARQ-ACK in respect of PDSCH#2. The value of K₁ in DCI#2 is three sub-slots. As explained with reference to Figure 13, the offset *K_{ReTx}* granularity uses the smallest granularity in the configured HARQ-ACKs codebooks. In this case, the granularity of both PUCCH#1 and PUCCH#2 is sub-slot based. Therefore, offset *K_{ReTx}* uses a sub-slot based granularity. As shown by arrow 934, the offset *K_{ReTx}* has a value of two sub-slots and therefore indicates sub-slot m+6. However, as shown in Figure 14, sub-slot m+6 includes both PUCCH#1 and PUCCH#2. In accordance with example embodiments, DCI#4 may include, in addition to the offset *K_{ReTx}*, a symbol offset *S_{ReTx}* relative to the start of sub-slot *m*+6 which was indicated by the offset *K_{ReTx}.* In this case, the offset *S_{ReTx}* is 2 symbols relative to the start of sub-slot m+6 which therefore indicates PUCCH#1 as the target PUCCH.

It will be appreciated that, although it is typically advantageous for the 1-shot ReTx to retransmit HARQ-ACKs that have been dropped or cancelled, it is not necessary for HARQ-ACKs to be cancelled or dropped in order to be indicated for retransmission. For example, in some cases a gNB may fail to decode a PUCCH which was successfully transmitted by the communications device 4, 14. In this case, the gNB may use the 1-shot trigger to instruct the communications device 4, 14 retransmit the HARQ-ACKs in the PUCCH which could not be successfully decoded.

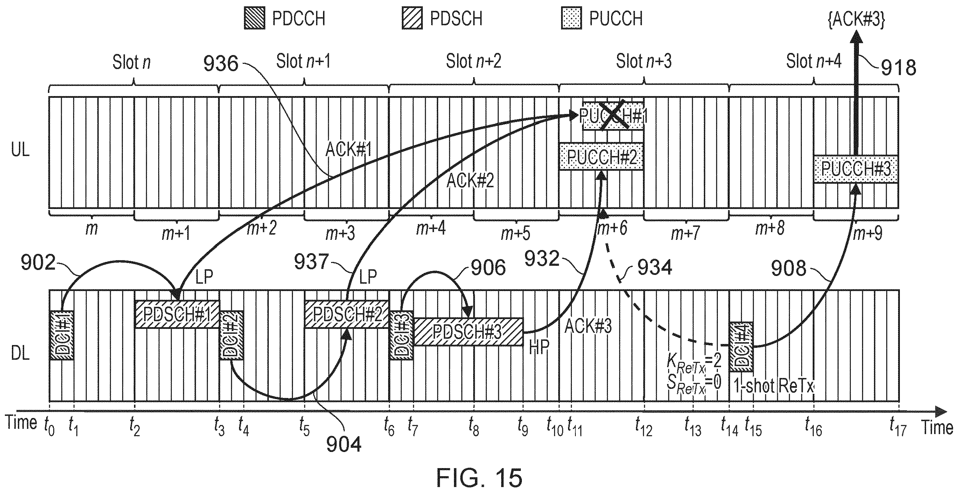

An example of this is shown in Figure 15. Figure 15 is based on Figure 14 and so only the differences will be described for brevity. Although Figure 14 was described in the context of inter-UE prioritisation in which both PUCCH#1 and PUCCH#2 are cancelled, Figure 15 is described in the context of intra-UE prioritisation in which the communications device 4, 14 determines to cancel PUCCH#1 because it has a lower priority than PUCCH#2. Therefore, in Figure 15, the communications device 4, 14 transmits PUCCH#2. DCI#4 includes an indication that the offset *K_{ReTx}=*2 has a value of two sub-slots and that the offset *S_{ReTx}* has a value of zero. Therefore, since PUCCH#2 starts at sub-slot m+6 (with no symbol offset), PUCCH#2 is indicated as the target PUCCH even though PUCCH#2 was previously transmitted by the communications device 4, 14.

### Component Carriers

In some embodiments, the communications device 4, 14 may be configured with multiple component carriers and different PUCCH transmissions are transmitted on different component carriers. Therefore, a slot or sub-slot indicated by the offset *K_{ReTx}* may include more than one PUCCH across multiple component carriers. In accordance with example embodiments, the DCI which indicates the target PUCCH also indicates the component carrier of the target PUCCH.

In some embodiments, the granularity of the offset *K_{ReTx}* is the smallest granularity of the component carriers which are configured for the communications device 4, 14. For example, a communications device 4, 14 may be configured with multiple component carriers in a carrier aggregation operation. As will be appreciated, different component carriers may have a different sub-carrier spacing which means the duration of each slot or sub-slot for different component carriers may be different. In some embodiments, offset *K_{ReTx},* uses the smallest granularity among all the component carriers which are configured for the communications device 4, 14.

In some embodiments, the offset *K_{ReTx}* may use the granularity of the PUCCH with the smallest granularity carried by the component carrier with the smallest granularity.

In some embodiments, the communications device 4, 14 may receive an indication of a granularity to use for the offset *K_{ReTx}* from a wireless communications network. For example, the offset *K_{ReTx}* granularity may be Radio Resource Control (RRC) configured.

### Condition Based Target PUCCH Selection

In some embodiments, as will be described in more detail below, the communications device 4, 14 may be configured to determine the target PUCCH based on implicit indicators in the case where PUCCHs are in an indicated slot or sub-slot. The use of implicit indicators is particularly advantageous in scenarios where the values of *K_{ReTx}* and *S_{ReTx}* cannot distinguish between multiple PUCCHs in an indicated slot or sub-slot. The implicit indicators may be one or more pre-defined conditions as explained in more detail below.

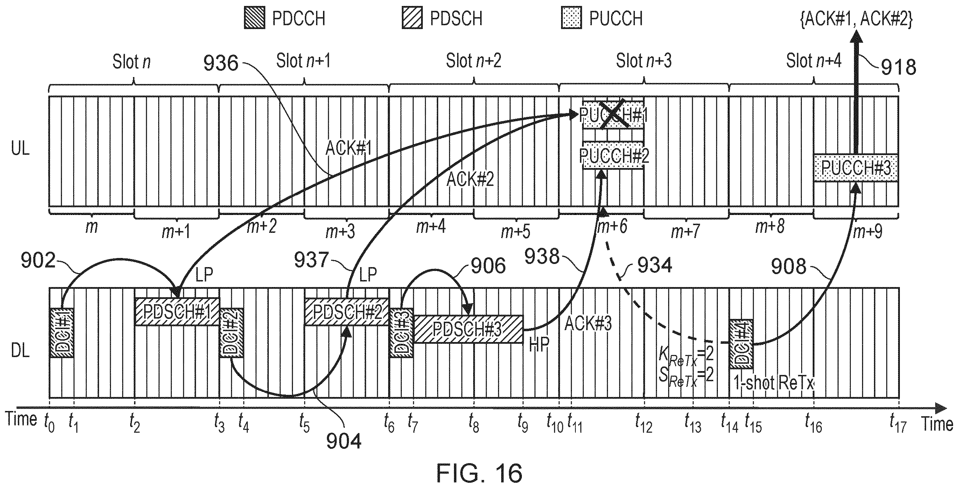

In some embodiments, the communications device 4, 14 may determine that the target PUCCH is the PUCCH which was cancelled or dropped. An example is shown in Figure 16. Figure 16 is based on Figure 15 and so only the differences will be described for brevity. As represented by arrow 938, DCI#3 indicates a high priority PUCCH#2 in sub-slot m+6 for transmitting an HARQ-ACK in respect of PDSCH#3. DCI#4 indicates the value of the offset *K_{ReTx}* as two sub-slots and a value of the offset *S_{ReTx}* as two symbols. However, as shown in Figure 16, both PUCCH#1 and PUCCH#2 start at an offset of two symbols into sub-slot m+6. In accordance with example embodiments, the communications device 4, 14 determines that the target PUCCH is the PUCCH which was dropped, which in this case is PUCCH#1.

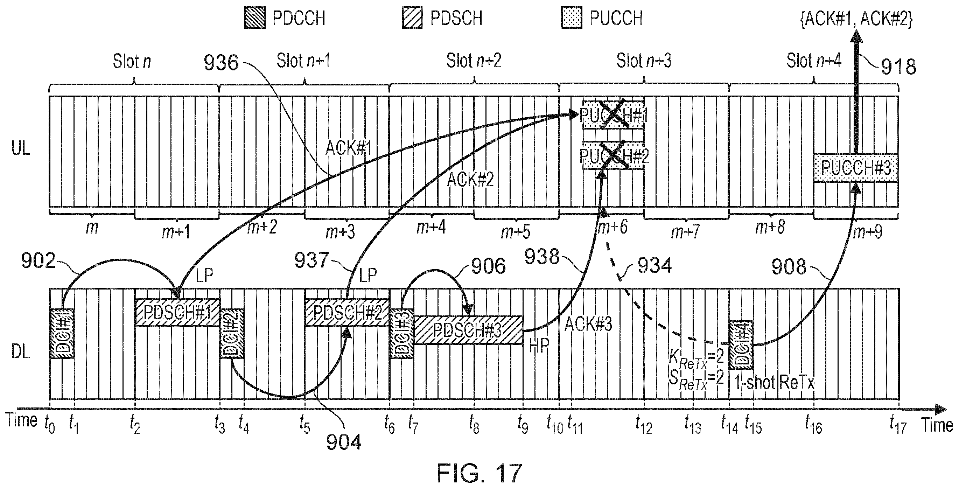

In some embodiments, the communications device 4, 14 may determine that the target PUCCH is the PUCCH which carries the largest number of HARQ-ACKs. An example is shown in Figure 17. Figure 17 is based on Figure 16 and so only the differences will be described for brevity. As shown in Figure 17, both PUCCH#1 and PUCCH#2 are cancelled. For example, the communications device 4, 14 may cancel PUCCH#1 and PUCCH#2 in response to receiving an uplink cancellation indicator as a result of the wireless communications network prioritising uplink transmissions from another communications device (inter-UE prioritisation). In Figure 17, PUCCH#1 carries more HARQ ACKs than PUCCH#2. Specifically, PUCCH#1 carries a HARQ-ACK labelled "ACK#1" in respect of PDSCH#1 and a HARQ-ACK labelled "ACK#2" in respect for PDSCH#2, whereas PUCCH#2 transmits only a HARQ-ACK labelled ACK#3 in respect of PDSCH#3. In accordance with example embodiments, the communications device 4, 14 selects PUCCH#1 as the target PUCCH because it carried more HARQ-ACKs than PUCCH#2.

### L1 Priority

In some embodiments, the communications device 4, 14 may determine that the target PUCCH is the PUCCH which has the higher L1 priority. For example, with reference to Figure 17, the communications device 4, 14 may determine that PUCCH#2 is the target PUCCH because PUCCH#2 has a higher L1 priority than PUCCH#1.

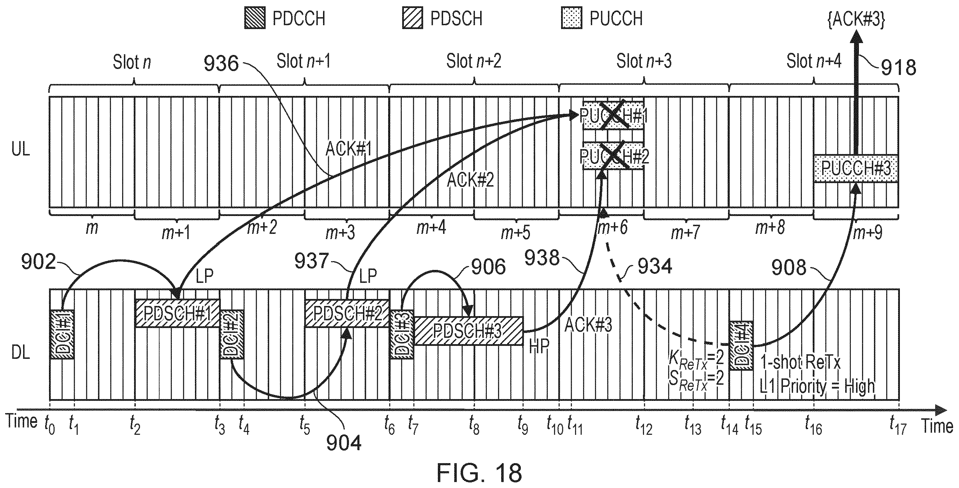

In some embodiments, the communications device 4, 14 may determine that the target PUCCH is the PUCCH which has the same L1 priority as the PUCCH indicated by the DCI which carries the 1-shot trigger. An example is shown in Figure 18, which is based on Figure 17. However, in Figure 18, the PUCCH#3 scheduled by DCI#4 has a high L1 priority. Therefore, since PUCCH#2 also has a high L1 priority, the communications device determines that PUCCH#2 is the target PUCCH.

### Multiplexed HARQ-ACK

In some embodiments, the communications device 4, 14 may multiplex the HARQ-ACKs carried by the PUCCH transmissions in the slot or sub-slot indicated by the DCI which includes the 1-shot trigger. The multiplexed HARQ-ACKs are retransmitted in the PUCCH scheduled by the DCI which includes the 1-shot ReTx.

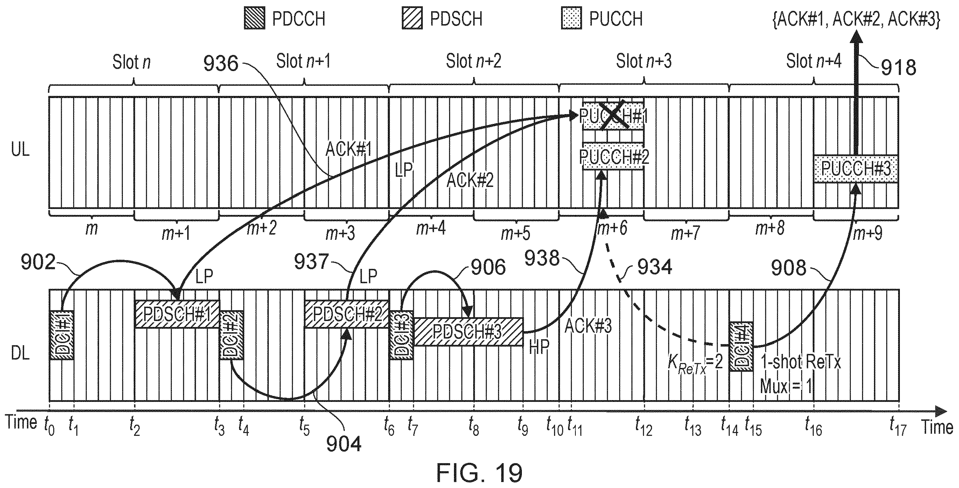

In some embodiments, the DCI which includes the 1-shot trigger indicates to the communications device 4, 14 whether or not to multiplex the HARQ-ACKs carried by the PUCCH transmissions in the indicated slot or sub-slot. In one example, a 1-bit Multiplexing Indicator *Mux* may be included in the DCI, where *Mux="1"* indicates that the HARQ-ACKs are to be multiplexed and *Mux=*"0" indicates the HARQ-ACKs are not to be multiplexed. An example is shown in Figure 19 which is based on Figure 18. However, in Figure 19, PUCCH#1 is dropped due to intra-UE prioritization and so PUCCH#2 is transmitted. DCI#4 triggers a 1-shot ReTx with *K_{ReTx}=*2 sub-slots and set its Multiplexing Indicator as *Mux*="1". Therefore the HARQ-ACKs in PUCCH#1 and PUCCH#2 are multiplexed together and retransmitted in PUCCH#3.

In some embodiments, the communications device 4, 14 may receive the indication of whether or not to multiplex the HARQ-ACKs carried by the PUCCH transmissions in the indicated slot or sub-slot in RRC signals from the wireless communications network. In other words, the indication is RRC configured.

### Same HPN Collision

In some embodiments, a gNB may schedule a first PDSCH and a corresponding HARQ-ACK in a first PUCCH, and schedule a second PDSCH with a corresponding HARQ-ACK in a second PUCCH, where the first PDSCH and the second PDSCH have the same HARQ Process Number (HPN). The gNB may subsequently transmit a 1-shot trigger to trigger a retransmission of the first or the second PUCCH.

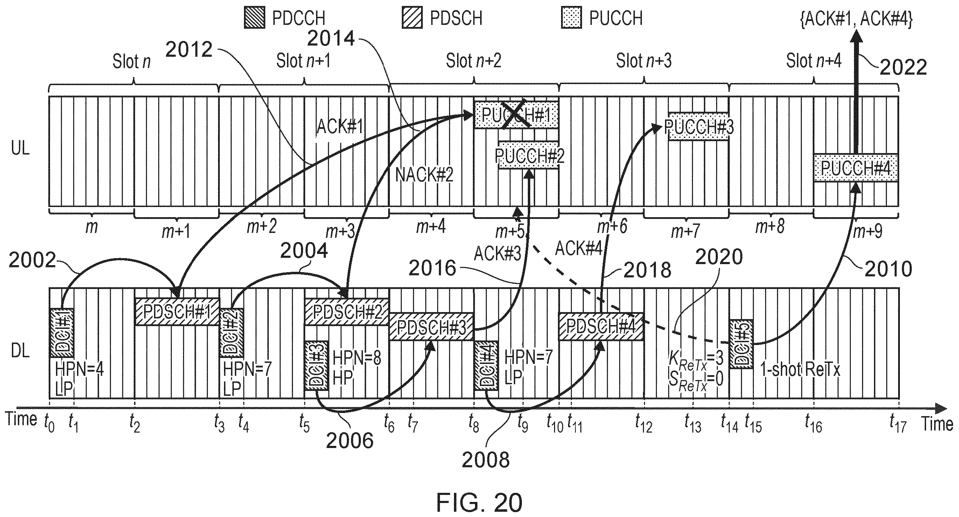

In some embodiments, if the second PDSCH is a retransmission of the first PDSCH and the 1-shot ReTx requests for a retransmission of the first PUCCH, then the communications device 4, 14 retransmits the HARQ-ACK in the second PUCCH. In other words, when a HPN collision occurs, the HARQ-ACK being transmitted corresponds to the latest PUCCH. The gNB may request a retransmission of the first PUCCH because the first PUCCH also contains HARQ-ACKs for other PDSCHs that have been dropped. Example embodiments according to this scenario is explained with reference to Figure 20.

In Figure 20, the communications device 4, 14 receives a first DCI labelled "DCI#1" which, as represented by arrow 2002, indicates an allocation of communications resources for transmitting a first physical downlink shared channel labelled "PDSCH#1" with HPN = 4. As represented by arrow 2012, DCI#1 indicates a first physical uplink control channel labelled "PUCCH#1" in sub-slot m+5 for transmitting a HARQ-ACK in respect of PDSCH#1. As shown in Figure 20, the HARQ-ACK for PDSCH#1 is to be transmitted in a low L1 priority PUCCH, PUCCH#1. The HARQ-ACK for PDSCH#1 is labelled as "ACK#1", indicating that PDSCH#1 was successfully decoded by the communications device 4, 14. The communications device 4, 14 receives a second DCI labelled "DCI#2" which, as represented by arrow 2004, indicates an allocation of communications resources for transmitting a second physical downlink shared channel labelled "PDSCH#2" with HPN = 7. As represented by arrow 2014, DCI#2 indicates PUCCH#1 in sub-slot m+5 for transmitting a HARQ-ACK in respect of PDSCH#2. As shown in Figure 20, the HARQ-ACK for PDSCH#2 is to be transmitted in a low L1 priority PUCCH, PUCCH#1. The HARQ-ACK for PDSCH#2 is labelled as "NACK#2", indicating that PDSCH#2 was not successfully decoded by the communications device 4, 14. The communications device 4, 14 receives third DCI labelled "DCI#3" which, as represented by arrow 2006, indicates an allocation of communications resources for transmitting a third physical downlink shared channel labelled "PDSCH#3" with HPN = 8. As represented by arrow 2016, DCI#3 indicates a second physical uplink control channel labelled "PUCCH#2" in sub-slot m+5 for transmitting a HARQ-ACK in respect of PDSCH#3. Therefore, PUCCH#1 collides with PUCCH#2. As shown In Figure 20, the HARQ-ACK for PDSCH#3 is to be transmitted in a high priority PUCCH, PUCCH#2. The HARQ-ACK for PDSCH#3 is labelled as "ACK#3", indicating that PDSCH#3 was successfully decoded by the communications device 4, 14. The communications device 4, 14 performs intra-UE prioritisation for the collision of PUCCH#1 and PUCCH#2 which leads to PUCCH#1 being dropped because it has a lower priority than PUCCH#2. At time *t*₈, the gNB transmits a fourth DCI labeled "DCI#4" which schedules a fourth physical downlink shared channel labeled "PDSCH#4" with HPN=7 as represented by arrow 2008. In this case, PDSCH#4 is a (blind) retransmission of PDSCH#2. The communications device 4, 14 soft combines PDSCH#4 with PDSCH#2, then successfully decodes the PDSCH formed from the soft combination of PDSCH#2 and PDSCH#4. It will be appreciated that PDSCH#2 and PDSCH#4 can be soft combined because they have the same HPN (in this example, the HPN for PDCSH#2 and PDSCH#4 is 7). Accordingly, as represented by arrow 2018, the communications device 4, 14 transmits a HARQ-ACK labelled "ACK#4" in PUCCH#3. Then, as represented by arrow 2020, the gNB transmits a fifth DCI labelled "DCI#5" which triggers a 1-shot ReTx with *K_{ReTx}=*3 and *S_{ReTx}=*0. Therefore, PUCCH#1 is selected as the target PUCCH. As explained above, NACK#2 corresponds to PDSCH#2 which is retransmitted in PDSCH#4. Furthermore, the communications device 4, 14 has already transmitted the HARQ-ACK for decoding PDSCH#4 in PUCCH#3. Therefore, the communications device retransmits the outcome of decoding PDSCH#4 (that is, ACK#4) together with ACK#1 in PUCCH#4 as represented by arrow 2022.

Although PDSCH#2 was unsuccessfully transmitted, the retransmission of PDSCH#2 in PDSCH#4 was successfully transmitted and the wireless communications network received a positive acknowledgement (ACK#4) in PUCCH#3 of this transmission. Therefore, the NACK#2 is outdated and any transmission of NACK#2 after the wireless communications network has already received ACK#4 may lead to a contradiction. Nevertheless, the communications device 4, 14 may wish to transmit the ACK#1 for PDSCH#1 and, if the offset *K_{ReTx}* indicates PUCCH#1, then this may undesirably lead to the retransmission of ACK#1 and NACK#2. However, according to example embodiments explained above, this problem is overcome by the communications device 4, 14 determining to transmit ACK#4 in place of NACK#2 in PUCCH#4.

In some embodiments, referring to Figure 20, the wireless communication network may wish to determine the decoding status of PDSCH#2 rather than the combined decoding status of PDSCH#2 and PDSCH#4. For example, when operating a control loop to choose modulation and coding schemes, it can be beneficial to have knowledge of the decoding status of failed PDSCH as this will allow the control loop to be adjusted appropriately. The wireless communication network can control the behaviour of whether to transmit the HARQ-ACK status of PDSCH#2 or the combined HARQ-ACK status of PDSCH#2 and PDSCH#4 via configuration signalling, such as RRC signalling.

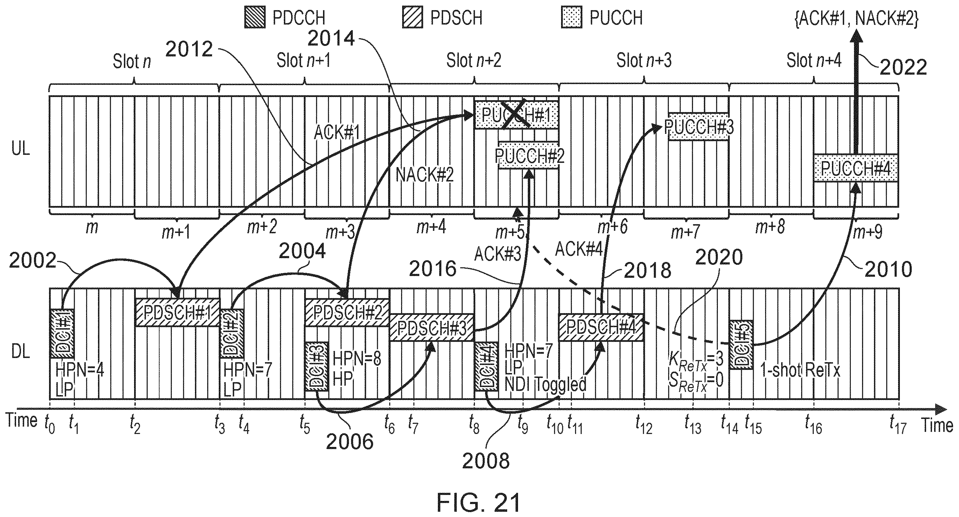

In some embodiments, the second PDSCH may be a new transmission. In other words, the second PDSCH overwrites the HARQ Process of the first PDSCH and the 1-shot ReTx requests for a retransmission of the first PUCCH. In this case, the communications device 4, 14 may retransmit the HARQ-ACK in the first PUCCH. Such embodiments recognise that the second PDSCH contains different data to that of the first PDSCH and so the gNB would be interested in the decoding outcome of the first PDSCH. An example is shown in Figure 21.

Figure 21 is based on Figure 20, and so only the differences will be described for brevity. In Figure 21, DCI#4 which schedules PDSCH#4 using the same HPN as that of PDSCH#2 (i.e. HPN = 7) includes a New Data Indicator (NDI) indicating that the PDSCH#4 is a new PDSCH. In other words, the NDI indicates that PDSCH#4 has different data compared with PDSCH#2.

As explained above, DCI#5 triggers a 1-shot ReTx with *K_{ReTx}=*3 and *S_{ReTx}=*0, which indicates that PUCCH#1 is the target PUCCH. Since PDSCH#4 has the same HPN as PDSCH#2 and contains different data, the HARQ-ACK for PDSCH#2 corresponds to the decoding outcome of PDSCH#2 (i.e. NACK#2). PUCCH#4 therefore retransmits ACK#1 and NACK#2.

It will be appreciated that the above-described embodiments can be combined in various ways as will be appreciated by one skilled in the art. For example, the use of finer *K_{ReTx}*, *S_{ReTx}* and the use of a multiplexing indicator can be combined such that the target PUCCH can be indicated precisely when multiplexing is not used.

Those skilled in the art will appreciate that references to "OFDM" apply to any type of OFDM-based modulation, including Cyclic Prefix OFDM (CP-OFDM), Discrete Fourier Transform Spread OFDM (DFT-S-OFDM) and Single Carrier Frequency Division Multiplexing (SC-FDM).

It will be appreciated that references to "time resource unit" may be any unit of communications resources in the time domain. For example, a time resource unit may be a slot or sub-slot as will be appreciated by one skilled in the art.

Those skilled in the art would further appreciate that such infrastructure equipment and/or communications devices as herein defined may be further defined in accordance with the various arrangements and embodiments discussed in the preceding paragraphs. It would be further appreciated by those skilled in the art that such infrastructure equipment and communications devices as herein defined and described may form part of communications systems other than those defined by the present disclosure.

It will be appreciated that the above description for clarity has described embodiments with reference to different functional units, circuitry and/or processors. However, it will be apparent that any suitable distribution of functionality between different functional units, circuitry and/or processors may be used without detracting from the embodiments.

Described embodiments may be implemented in any suitable form including hardware, software, firmware or any combination of these. Described embodiments may optionally be implemented at least partly as computer software running on one or more data processors and/or digital signal processors. The elements and components of any embodiment may be physically, functionally and logically implemented in any suitable way. Indeed the functionality may be implemented in a single unit, in a plurality of units or as part of other functional units. As such, the disclosed embodiments may be implemented in a single unit or may be physically and functionally distributed between different units, circuitry and/or processors.

Although the present disclosure has been described in connection with some embodiments, it is not intended to be limited to the specific form set forth herein. Additionally, although a feature may appear to be described in connection with particular embodiments, one skilled in the art would recognise that various features of the described embodiments may be combined in any manner suitable to implement the technique.

### References

[1] Holma H. and Toskala A, "LTE for UMTS OFDMA and SC-FDMA based radio access", John Wiley and Sons, 2009.
[2] TR 38.913, "Study on Scenarios and Requirements for Next Generation Access Technologies (Release 14)", third Generation Partnership Project, v14.3.0.
[3] RP-190726, "Physical layer enhancements for NR ultra-reliable and low latency communication (URLLC)", Huawei, HiSilicon, RAN#83.
[4] RP-201310, "Revised WID: Enhanced Industrial Internet of Things (IoT) and ultra-reliable and low latency communication (URLLC) support for NR," Nokia, Nokia Shanghai Bell, RAN#88e.
[5] R1-2106962, "UE feedback enhancements for HARQ-ACK," CATT, RAN1#106e
[6] R1-2106636, "HARQ-ACK Feedback Enhancements for URLLC/IIoT," Nokia, Nokia Shanghai Bell, RAN1#106e

## Claims

1. A method of operating a communications device to receive data from a wireless communications network, the method comprising
receiving a plurality of downlink transmissions in physical downlink shared channel resources forming part of communications resources of a wireless access interface provided by the wireless communications network which are divided in time into a plurality of time resource units comprising slots and sub-slots, each of the plurality of downlink transmissions being a transmission of a data unit according to a different Hybrid Automatic Repeat Request, HARQ, type process,
determining a HARQ acknowledgement or negative acknowledgement, HARQ-ACK, for each of the plurality of received downlink transmissions in accordance with whether the data unit for the HARQ type process was correctly received or not,
identifying communications resources of the wireless access interface for transmitting a physical uplink control channel associated with each of the plurality of downlink transmissions, the communications resources of the physical uplink control channel being identified for transmitting the HARQ-ACKs for the plurality of received downlink transmissions as a plurality of uplink control messages, and
after a time when the plurality of uplink control messages are identified for transmission, receiving a trigger as a downlink control message from the wireless communications network to transmit or to retransmit a targeted one of the plurality of uplink control messages in one or more subsequent time resource units of the communications resources of the wireless access interface indicated by the trigger, the targeted uplink control message being indicated using a fine indicator comprising a temporal offset identifying one of the plurality of time resource units which includes the targeted uplink control message,
determining a smallest granularity of slot or sub-slot used by one or more temporal offsets (K1) to identify a number of the slots or sub-slots in which the plurality of uplink control messages were scheduled with respect to the plurality of downlink transmissions in the physical downlink shared channel resources, wherein the temporal offset identifying one of the plurality of time resource units which includes the targeted uplink control message indicates a number of slots or sub-slots using the determined smallest granularity, and
in response to the trigger, transmitting or retransmitting the targeted uplink control message carrying one or more of the HARQ-ACKs.

2. A method according to claim 1, wherein the communications device is configured with two or more HARQ-ACK codebooks for communicating the data-units carried by the different HARQ-types processes, each codebook being associated with a different granularity for the one or more temporal offsets (K1) used to identify the slots or sub-slots in which the plurality of uplink control messages were scheduled with respect to the plurality of downlink transmissions in the physical downlink shared channel resources.

3. A method according to claim 1, wherein the communications device is configured with two or more component carriers for communicating the data-units carried by the different HARQ-type processes, each component carrier providing a different granularity for the one or more temporal offsets (K1) used to identify the slots or sub-slots in which the plurality of uplink control messages were scheduled with respect to the plurality of downlink transmissions in the physical downlink shared channel resources.

4. A method according to claim 3, wherein the downlink control message received from the wireless communications network includes an indication of a component carrier of the target uplink control message.

5. A method according to claim 1, wherein the communications resources of the wireless access interface comprise a plurality of Orthogonal Frequency Divisional Multiplexed, OFDM, symbols in each slot or sub-slot and the temporal offset which identifies the time resource unit which includes the targeted uplink control message includes a number of the slots or sub-slots and a number of OFDM symbols (*S_{ReTx}*), the number of slots or sub-slots indicating a slot or sub-slot which includes the targeted uplink control message and the number of OFDM symbols (*S_{ReTx}*) indicating an OFDM symbol in the indicated slot or sub-slot in which the targeted uplink control message starts or ends.

6. A method according to claim 5, wherein the number of OFDM symbols (*S_{ReTx}*) indicates the OFDM symbol in the indicated slot or sub-slot in which the targeted uplink control message starts or ends as an offset from the start or end of the indicated slot or sub-slot.

7. A method according to claim 1, wherein the temporal offset which identifies the time resource unit which includes the targeted uplink control message indicates the slot or the sub-slot in which the targeted one of the plurality of uplink control messages was scheduled for transmission and the method comprises identifying the targeted one of the plurality of uplink control messages which starts in the identified slot or sub-slot in which the uplink control message was scheduled for transmission.

8. A method according to claim 1, wherein the temporal offset which identifies the time resource unit which includes the targeted uplink control message indicates the slot or the sub-slot in which the targeted one of the plurality of uplink control messages was scheduled for transmission and the method comprises identifying the targeted one of the plurality of uplink control messages which ends in the identified slot or sub-slot in which the uplink control message was scheduled for transmission.

9. A method according to claim 1, comprising
identifying the targeted uplink control message from a plurality of uplink control messages which are scheduled for transmission in the same time resource unit which includes the targeted uplink control message indicated by the temporal offset.

10. A method of operating an infrastructure equipment of a wireless communications network to transmit data to a communications device, the method comprising
transmitting a plurality of downlink transmissions in physical downlink shared channel resources forming part of communications resources of a wireless access interface provided by the wireless communications network which are divided in time into a plurality of time resource units comprising slots and sub-slots, each of the plurality of downlink transmissions being a transmission of a data unit according to a different Hybrid Automatic Repeat Request, HARQ, type process, each of the plurality of physical downlink transmissions being associated with a physical uplink control channel forming part of the communications resources of the wireless access interface for transmitting a HARQ acknowledgement or negative acknowledgement, HARQ-ACK, for each of the plurality of received downlink transmissions in accordance with whether the data unit for the HARQ type process was correctly received or not, the communications resources of the physical uplink control channel being identified for reception as a plurality of uplink control messages, and
after a time when the plurality of uplink control messages are identified for reception, transmitting a trigger as a downlink control message to the communications device to transmit or to retransmit a targeted one of the plurality of uplink control messages in one or more subsequent time resource units of the communications resources of the wireless access interface indicated by the trigger, the targeted uplink control message being indicated using a fine indicator comprising a temporal offset identifying one of the plurality of time resource units which includes the targeted uplink control message, and
in response to the trigger, receiving the targeted uplink control message carrying one or more of the HARQ-ACKs, wherein
the temporal offset identifying one of the plurality of time resource units which includes the targeted uplink control message indicates a number of slots or sub-slots using a determined smallest granularity, the determined smallest granularity being a smallest granularity of slot or sub-slot used by one or more temporal offsets (K1) to identify a number of the slots or sub-slots in which the plurality of uplink control messages were scheduled with respect to the plurality of downlink transmissions in the physical downlink shared channel resources.

11. Circuitry for a communications device operable to receive data from a wireless communications network, the circuitry comprising
transceiver circuitry configured to transmit and/or to receive signals, and
control circuitry configured in combination with the transceiver circuitry to
receive a plurality of downlink transmissions in physical downlink shared channel resources forming part of communications resources of a wireless access interface provided by the wireless communications network which are divided in time into a plurality of time resource units comprising slots and sub-slots, each of the plurality of downlink transmissions being a transmission of a data unit according to a different Hybrid Automatic Repeat Request, HARQ, type process,
determine a HARQ acknowledgement or negative acknowledgement, HARQ-ACK, for each of the plurality of received downlink transmissions in accordance with whether the data unit for the HARQ type process was correctly received or not,
identify communications resources of the wireless access interface for transmitting a physical uplink control channel associated with each of the plurality of downlink transmissions, the communications resources of the physical uplink control channel being identified for transmitting the HARQ-ACKs for the plurality of received downlink transmissions as a plurality of uplink control messages, and
after a time when the plurality of uplink control messages are identified for transmission, receive a trigger as a downlink control message from the wireless communications network to transmit or to retransmit a targeted one of the plurality of uplink control messages in one or more subsequent time resource units of the communications resources of the wireless access interface indicated by the trigger, the targeted uplink control message being indicated using a fine indicator comprising a temporal offset identifying one of the plurality of time resource units which includes the targeted uplink control message,
determining a smallest granularity of slot or sub-slot used by one or more temporal offsets (K1) to identify a number of the slots or sub-slots in which the plurality of uplink control messages were scheduled with respect to the plurality of downlink transmissions in the physical downlink shared channel resources, wherein the temporal offset identifying one of the plurality of time resource units which includes the targeted uplink control message indicates a number of slots or sub-slots using the determined smallest granularity, and
in response to the trigger, transmit or retransmit the targeted uplink control message carrying one or more of the HARQ-ACKs.

12. A communications device operable to receive data from a wireless communications network, the communications device comprising circuitry according to claim 11.

13. Circuitry for an infrastructure equipment of a wireless communications network operable to transmit data to a communications device, the circuitry comprising
transceiver circuitry configured to transmit and/or to receive signals, and
control circuitry configured in combination with the transceiver circuitry to
transmit a plurality of downlink transmissions in physical downlink shared channel resources forming part of communications resources of a wireless access interface provided by the wireless communications network which are divided in time into a plurality of time resource units comprising slots and sub-slots, each of the plurality of downlink transmissions being a transmission of a data unit according to a different Hybrid Automatic Repeat Request, HARQ, type process, each of the plurality of physical downlink transmissions being associated with a physical uplink control channel forming part of the communications resources of the wireless access interface for transmitting a HARQ acknowledgement or negative acknowledgement, HARQ-ACK, for each of the plurality of received downlink transmissions in accordance with whether the data unit for the HARQ type process was correctly received or not, the communications resources of the physical uplink control channel being identified for reception as a plurality of uplink control messages, and
after a time when the plurality of uplink control messages are identified for reception, transmit a trigger as a downlink control message to the communications device to transmit or to retransmit a targeted one of the plurality of uplink control messages in one or more subsequent time resource units of the communications resources of the wireless access interface indicated by the trigger, the targeted uplink control message being indicated using a fine indicator comprising a temporal offset identifying one of the plurality of time resource units which includes the targeted uplink control message, and
in response to the trigger, receive the targeted uplink control message carrying one or more of the HARQ-ACKs, wherein
the temporal offset identifying one of the plurality of time resource units which includes the targeted uplink control message indicates a number of slots or sub-slots using a determined smallest granularity, the determined smallest granularity being a smallest granularity of slot or sub-slot used by one or more temporal offsets (K1) to identify a number of the slots or sub-slots in which the plurality of uplink control messages were scheduled with respect to the plurality of downlink transmissions in the physical downlink shared channel resources.

14. Infrastructure equipment for a wireless communications network operable to transmit data to a communications device, the infrastructure equipment comprising circuitry according to claim 13.

15. A computer program comprising instructions which, when the program is executed by a computer, cause the computer to carry out a method according to claim 1 or claim 10.

## Patentansprüche

1. Verfahren zum Betreiben einer Kommunikationsvorrichtung, um Daten von einem drahtlosen Kommunikationsnetzwerk zu empfangen, wobei das Verfahren umfasst
Empfangen einer Vielzahl von Downlink-Übertragungen in Ressourcen eines gemeinsam genutzten physischen Downlink-Kanals, die Teil von Kommunikationsressourcen einer drahtlosen Zugangsschnittstelle bilden, die durch das drahtlose Kommunikationsnetzwerk bereitgestellt wird, welche zeitlich in eine Vielzahl von Zeitressourceneinheiten unterteilt sind, die Slots und Sub-Slots umfassen, wobei jede der Vielzahl von Downlink-Übertragungen eine Übertragung einer Dateneinheit gemäß einem anderen Hybrid-Automatic-Repeat-Request-Typ-Prozess (HARQ-Typ-Prozess) ist,
Bestimmen einer HARQ-Bestätigung oder negativen Bestätigung (HARQ-ACK) für jede der Vielzahl von empfangenen Downlink-Übertragungen in Übereinstimmung damit, ob die Dateneinheit für den HARQ-Typ-Prozess korrekt empfangen wurde oder nicht,
Identifizieren von Kommunikationsressourcen der drahtlosen Zugangsschnittstelle zum Übertragen eines physischen Uplink-Steuerkanals, der jeder der Vielzahl von Downlink-Übertragungen zugeordnet ist, wobei die Kommunikationsressourcen des physischen Uplink-Steuerkanals zum Übertragen der HARQ-ACKs für die Vielzahl von empfangenen Downlink-Übertragungen als eine Vielzahl von Uplink-Steuernachrichten identifiziert werden, und
nach einem Zeitpunkt, zu dem die Vielzahl von Uplink-Steuernachrichten zur Übertragung identifiziert wird, Empfangen eines Auslösers als eine Downlink-Steuernachricht von dem drahtlosen Kommunikationsnetzwerk zum Übertragen oder erneuten Übertragen einer anvisierten der Vielzahl von Uplink-Steuernachrichten in einer oder mehreren nachfolgenden Zeitressourceneinheiten der Kommunikationsressourcen der drahtlosen Zugangsschnittstelle, die durch den Auslöser angezeigt werden, wobei die anvisierte Uplink-Steuernachricht unter Verwendung eines Feinindikators angezeigt wird, der einen zeitlichen Versatz umfasst, der eine der Vielzahl von Zeitressourceneinheiten identifiziert, die die anvisierte Uplink-Steuernachricht einschließt,
Bestimmen einer kleinsten Granularität von Slot oder Sub-Slot, die von einem oder mehreren zeitlichen Versätzen (K1) verwendet wird, um eine Anzahl der Slots oder Sub-Slots zu identifizieren, in denen die Vielzahl von Uplink-Steuernachrichten in Bezug auf die Vielzahl von Downlink-Übertragungen in den Ressourcen des gemeinsam genutzten physischen Downlink-Kanals geplant wurde, wobei der zeitliche Versatz, der eine der Vielzahl von Zeitressourceneinheiten identifiziert, die die anvisierte Uplink-Steuernachricht einschließt, eine Anzahl von Slots oder Sub-Slots unter Verwendung der bestimmten kleinsten Granularität angibt, und
als Reaktion auf den Auslöser, Übertragen oder erneutes Übertragen der anvisierten Uplink-Steuernachricht, die eine oder mehrere der HARQ-ACKs enthält.

2. Verfahren nach Anspruch 1, wobei die Kommunikationsvorrichtung mit zwei oder mehr HARQ-ACK-Codebüchern zum Kommunizieren der Dateneinheiten konfiguriert ist, die durch die verschiedenen HARQ-Typ-Prozesse übertragen werden, wobei jedes Codebuch einer unterschiedlichen Granularität für den einen oder die mehreren zeitlichen Versätze (K1) zugeordnet ist, die verwendet werden, um die Slots oder Sub-Slots zu identifizieren, in denen die Vielzahl von Uplink-Steuernachrichten in Bezug auf die Vielzahl von Downlink-Übertragungen in den Ressourcen des gemeinsam genutzten physischen Downlink-Kanals geplant wurden.

3. Verfahren nach Anspruch 1, wobei die Kommunikationsvorrichtung mit zwei oder mehr Komponententrägern zum Kommunizieren der Dateneinheiten konfiguriert ist, die von den verschiedenen Prozessen vom HARQ-Typ getragen werden, wobei jeder Komponententräger eine unterschiedliche Granularität für den einen oder die mehreren zeitlichen Versätze (K1) bereitstellt, die verwendet werden, um die Slots oder Sub-Slots zu identifizieren, in denen die Vielzahl von Uplink-Steuernachrichten in Bezug auf die Vielzahl von Downlink-Übertragungen in den Ressourcen des gemeinsam genutzten physischen Downlink-Kanals geplant wurde.

4. Verfahren nach Anspruch 3, wobei die von dem drahtlosen Kommunikationsnetzwerk empfangene Downlink-Steuernachricht eine Angabe eines Komponententrägers der Ziel-Uplink-Steuernachricht einschließt.

5. Verfahren nach Anspruch 1, wobei die Kommunikationsressourcen der drahtlosen Zugangsschnittstelle eine Vielzahl von Orthogonal-Frequency-Divisional-Multiplexed-Symbolen (OFDM-Symbolen) in jedem Slot oder Sub-Slot umfassen und der zeitliche Versatz, der die Zeitressourceneinheit identifiziert, die die anvisierte Uplink-Steuernachricht einschließt, eine Anzahl der Slots oder Sub-Slots und eine Anzahl von OFDM-Symbolen (*S_{ReTx}*) einschließt, wobei die Anzahl von Slots oder Sub-Slots einen Slot oder Sub-Slot angibt, der die anvisierte Uplink-Steuernachricht einschließt, und die Anzahl von OFDM-Symbolen (*S_{ReTx}*) ein OFDM-Symbol in dem angegebenen Slot oder Sub-Slot angibt, in dem die anvisierte Uplink-Steuernachricht beginnt oder endet.

6. Verfahren nach Anspruch 5, wobei die Anzahl von OFDM-Symbolen (*S_{ReTx}*) das OFDM-Symbol in dem angegebenen Slot oder Sub-Slot, in dem die anvisierte Uplink-Steuernachricht beginnt oder endet, als einen Versatz vom Beginn oder Ende des angegebenen Slots oder Sub-Slots angibt.

7. Verfahren nach Anspruch 1, wobei der zeitliche Versatz, der die Zeitressourceneinheit identifiziert, die die anvisierte Uplink-Steuernachricht einschließt, den Slot oder den Sub-Slot angibt, in dem die anvisierte der Vielzahl von Uplink-Steuernachrichten zur Übertragung eingeplant war, und das Verfahren das Identifizieren der anvisierten der Vielzahl von Uplink-Steuernachrichten umfasst, die in dem identifizierten Slot oder Sub-Slot beginnt, in dem die Uplink-Steuernachricht zur Übertragung eingeplant war.

8. Verfahren nach Anspruch 1, wobei der zeitliche Versatz, der die Zeitressourceneinheit identifiziert, die die anvisierte Uplink-Steuernachricht einschließt, den Slot oder den Sub-Slot angibt, in dem die anvisierte der Vielzahl von Uplink-Steuernachrichten zur Übertragung geplant war, und das Verfahren das Identifizieren der anvisierten der Vielzahl von Uplink-Steuernachrichten umfasst, die in dem identifizierten Slot oder Sub-Slot endet, in dem die Uplink-Steuernachricht zur Übertragung geplant war.

9. Verfahren nach Anspruch 1, umfassend
Identifizieren der anvisierten Uplink-Steuernachricht aus einer Vielzahl von Uplink-Steuernachrichten, die zur Übertragung in derselben Zeitressourceneinheit geplant sind, die die durch den zeitlichen Versatz angegebene anvisierte Uplink-Steuernachricht einschließt.

10. Verfahren zum Betreiben einer Infrastrukturausrüstung eines drahtlosen Kommunikationsnetzwerks, um Daten an eine Kommunikationsvorrichtung zu übertragen, wobei das Verfahren umfasst
Übertragen einer Vielzahl von Downlink-Übertragungen in Ressourcen eines gemeinsam genutzten physischen Downlink-Kanals, die Teil von Kommunikationsressourcen einer drahtlosen Zugangsschnittstelle bilden, bereitgestellt durch das drahtlose Kommunikationsnetzwerk, die zeitlich in eine Vielzahl von Zeitressourceneinheiten unterteilt sind, die Slots und Sub-Slots umfassen, wobei jede der Vielzahl von Downlink-Übertragungen eine Übertragung einer Daten-Einheit gemäß einem anderen Hybrid-Automatic-Repeat-Request-Typ-Prozess (HARQ-Typ-Prozess) ist, wobei jede der Vielzahl von physischen Downlink-Übertragungen einem physischen Uplink-Steuerkanal zugeordnet ist, der Teil der Kommunikationsressourcen der drahtlosen Zugangsschnittstelle bildet, zum Übertragen einer HARQ-Bestätigung oder negativen Bestätigung (HARQ-ACK) für jede der Vielzahl von empfangenen Downlink-Übertragungen in Übereinstimmung damit, ob die Dateneinheit für den HARQ-Typ-Prozess korrekt empfangen wurde oder nicht, wobei die Kommunikationsressourcen des physischen Uplink-Steuerkanals für den Empfang als eine Vielzahl von Uplink-Steuernachrichten identifiziert werden, und
nach einem Zeitpunkt, zu dem die Vielzahl von Uplink-Steuernachrichten für den Empfang identifiziert wird, Übertragen eines Auslösers als eine Downlink-Steuernachricht an die Kommunikationsvorrichtung, um eine anvisierte der Vielzahl von Uplink-Steuernachrichten in einer oder mehreren nachfolgenden Zeitressourceneinheiten der Kommunikationsressourcen der drahtlosen Zugriffsschnittstelle, die durch den Auslöser angegeben werden, zu übertragen oder erneut zu übertragen, wobei die anvisierte Uplink-Steuernachricht unter Verwendung eines Feinindikators angegeben wird, der einen zeitlichen Versatz umfasst, der eine der Vielzahl von Zeitressourceneinheiten identifiziert, die die anvisierte Uplink-Steuernachricht einschließt, und
als Reaktion auf den Auslöser, Empfangen der anvisierten Uplink-Steuernachricht, die eine oder mehrere der HARQ-ACKs enthält, wobei
der zeitliche Versatz, der eine der Vielzahl von Zeitressourceneinheiten identifiziert, die die anvisierte Uplink-Steuernachricht einschließt, eine Anzahl von Slots oder Sub-Slots unter Verwendung einer bestimmten kleinsten Granularität angibt, wobei die bestimmte kleinste Granularität eine kleinste Granularität von Slot oder Sub-Slot ist, die von einem oder mehreren zeitlichen Versätzen (K1) verwendet wird, um eine Anzahl der Slots oder Sub-Slots zu identifizieren, in denen die Vielzahl von Uplink-Steuernachrichten in Bezug auf die Vielzahl von Downlink-Übertragungen in den Ressourcen des gemeinsam genutzten physischen Downlink-Kanals geplant wurden.

11. Schaltung für eine Kommunikationsvorrichtung, die betrieben werden kann, um Daten von einem drahtlosen Kommunikationsnetzwerk zu empfangen, wobei die Schaltung umfasst
eine Transceiver-Schaltung, die konfiguriert ist, um Signale zu übertragen und/oder zu empfangen, und
eine Steuerschaltung, die in Kombination mit der Transceiver-Schaltung konfiguriert ist zum
Empfangen einer Vielzahl von Downlink-Übertragungen in Ressourcen eines gemeinsam genutzten physischen Downlink-Kanals, die Teil von Kommunikationsressourcen einer drahtlosen Zugangsschnittstelle bilden, die durch das drahtlose Kommunikationsnetzwerk bereitgestellt wird, welche zeitlich in eine Vielzahl von Zeitressourceneinheiten unterteilt sind, die Slots und Sub-Slots umfassen, wobei jede der Vielzahl von Downlink-Übertragungen eine Übertragung einer Dateneinheit gemäß einem anderen Hybrid-Automatic-Repeat-Request-Typ-Prozess (HARQ-Typ-Prozess) ist,
Bestimmen einer HARQ-Bestätigung oder negativen Bestätigung (HARQ-ACK) für jede der Vielzahl von empfangenen Downlink-Übertragungen in Übereinstimmung damit, ob die Dateneinheit für den HARQ-Typ-Prozess korrekt empfangen wurde oder nicht,
Identifizieren von Kommunikationsressourcen der drahtlosen Zugangsschnittstelle zum Übertragen eines physischen Uplink-Steuerkanals, der jeder der Vielzahl von Downlink-Übertragungen zugeordnet ist, wobei die Kommunikationsressourcen des physischen Uplink-Steuerkanals zum Übertragen der HARQ-ACKs für die Vielzahl von empfangenen Downlink-Übertragungen als eine Vielzahl von Uplink-Steuernachrichten identifiziert werden, und
nach einem Zeitpunkt, zu dem die Vielzahl von Uplink-Steuernachrichten zum Übertragen identifiziert wird, Empfangen eines Auslösers als eine Downlink-Steuernachricht von dem drahtlosen Kommunikationsnetzwerk, um eine anvisierte der Vielzahl von Uplink-Steuernachrichten in einer oder mehreren nachfolgenden Zeitressourceneinheiten der Kommunikationsressourcen der drahtlosen Zugangsschnittstelle, die durch den Auslöser angezeigt werden, zu übertragen oder erneut zu übertragen, wobei die anvisierte Uplink-Steuernachricht unter Verwendung eines Feinindikators angezeigt wird, der einen zeitlichen Versatz umfasst, der eine der Vielzahl von Zeitressourceneinheiten identifiziert, die die anvisierte Uplink-Steuernachricht einschließt,
Bestimmen einer kleinsten Granularität von Slot oder Sub-Slot, die von einem oder mehreren zeitlichen Versätzen (K1) verwendet wird, um eine Anzahl der Slots oder Sub-Slots zu identifizieren, in denen die Vielzahl von Uplink-Steuernachrichten in Bezug auf die Vielzahl von Downlink-Übertragungen in den Ressourcen des gemeinsam genutzten physischen Downlink-Kanals geplant wurde, wobei der zeitliche Versatz, der eine der Vielzahl von Zeitressourceneinheiten identifiziert, die die anvisierte Uplink-Steuernachricht einschließt, eine Anzahl von Slots oder Sub-Slots unter Verwendung der bestimmten kleinsten Granularität angibt, und
als Reaktion auf den Auslöser, Übertragen oder erneutes Übertragen der anvisierten Uplink-Steuernachricht, die eine oder mehrere der HARQ-ACKs enthält.

12. Kommunikationsvorrichtung, die betrieben werden kann, um Daten von einem drahtlosen Kommunikationsnetzwerk zu empfangen, wobei die Kommunikationsvorrichtung eine Schaltung nach Anspruch 11 umfasst.

13. Schaltung für eine Infrastrukturausrüstung eines drahtlosen Kommunikationsnetzwerks, das betrieben werden kann, um Daten an eine Kommunikationsvorrichtung zu übertragen, wobei die Schaltung umfasst
eine Transceiver-Schaltung, die konfiguriert ist, um Signale zu übertragen und/oder zu empfangen, und
eine Steuerschaltung, die in Kombination mit der Transceiver-Schaltung konfiguriert ist zum
Übertragen einer Vielzahl von Downlink-Übertragungen in Ressourcen des gemeinsam genutzten physischen Downlink-Kanals, die Teil von Kommunikationsressourcen einer drahtlosen Zugangsschnittstelle bilden, bereitgestellt durch das drahtlose Kommunikationsnetzwerk, die zeitlich in eine Vielzahl von Zeitressourceneinheiten unterteilt sind, die Slots und Sub-Slots umfassen, wobei jede der Vielzahl von Downlink-Übertragungen eine Übertragung einer Daten-Einheit gemäß einem anderen Hybrid-Automatic-Repeat-Request-Typ-Prozess (HARQ-Typ-Prozess) ist, wobei jede der Vielzahl von physischen Downlink-Übertragungen einem physischen Uplink-Steuerkanal zugeordnet ist, der Teil der Kommunikationsressourcen der drahtlosen Zugangsschnittstelle zum Übertragen einer HARQ-Bestätigung oder negativen Bestätigung, HARQ-ACK, für jede der Vielzahl von empfangenen Downlink-Übertragungen in Übereinstimmung damit, ob die Dateneinheit für den HARQ-Typ-Prozess korrekt empfangen wurde oder nicht, wobei die Kommunikationsressourcen des physischen Uplink-Steuerkanals für den Empfang als eine Vielzahl von Uplink-Steuernachrichten identifiziert werden, und
nach einem Zeitpunkt, zu dem die Vielzahl von Uplink-Steuernachrichten für den Empfang identifiziert wird, Übertragen eines Auslösers als eine Downlink-Steuernachricht an die Kommunikationsvorrichtung, um eine anvisierte der Vielzahl von Uplink-Steuernachrichten in einer oder mehreren nachfolgenden Zeitressourceneinheiten der Kommunikationsressourcen der drahtlosen Zugangsschnittstelle, die durch den Auslöser angegeben werden, zu übertragen oder erneut zu übertragen, wobei die anvisierte Uplink-Steuernachricht unter Verwendung eines Feinindikators angegeben wird, der einen zeitlichen Versatz umfasst, der eine der Vielzahl von Zeitressourceneinheiten identifiziert, die die anvisierte Uplink-Steuernachricht einschließt, und
als Reaktion auf den Auslöser, Empfangen der anvisierten Uplink-Steuernachricht, die eine oder mehrere der HARQ-ACKs enthält, wobei
der zeitliche Versatz, der eine der Vielzahl von Zeitressourceneinheiten identifiziert, die die anvisierte Uplink-Steuernachricht einschließt, eine Anzahl von Slots oder Sub-Slots unter Verwendung einer bestimmten kleinsten Granularität angibt, wobei die bestimmte kleinste Granularität eine kleinste Granularität von Slot oder Sub-Slot ist, die von einem oder mehreren zeitlichen Versätzen (K1) verwendet wird, um eine Anzahl der Slots oder Sub-Slots zu identifizieren, in denen die Vielzahl von Uplink-Steuernachrichten in Bezug auf die Vielzahl von Downlink-Übertragungen in den Ressourcen des gemeinsam genutzten physischen Downlink-Kanals geplant wurden.

14. Infrastrukturausrüstung für ein drahtloses Kommunikationsnetzwerk, die betreibbar ist, um Daten an eine Kommunikationsvorrichtung zu übertragen, wobei die Infrastrukturausrüstung eine Schaltung nach Anspruch 13 umfasst.

15. Computerprogramm, das Anweisungen umfasst, die, wenn das Programm von einem Computer ausgeführt wird, den Computer veranlassen, das Verfahren nach Anspruch 1 oder 10 auszuführen.

## Revendications

1. Procédé de fonctionnement d'un dispositif de communications (270) pour transmettre des données à un réseau de communications sans fil, le procédé comprenant
la réception d'une pluralité de transmissions de liaison descendante dans des ressources de canal partagé de liaison descendante physique faisant partie de ressources de communications d'une interface d'accès sans fil fournies par le réseau de communications sans fil, qui sont divisées en temps en une pluralité d'unités de ressources temporelles comprenant des créneaux et des sous-créneaux, chacune de la pluralité de transmissions de liaison descendante étant une transmission d'une unité de données selon un processus de type à demande de répétition automatique hybride, HARQ,
la détermination d'un accusé de réception HARQ ou d'un accusé de réception négatif, HARQ-ACK, pour chacune de la pluralité de transmissions de liaison descendante reçues conformément au fait que l'unité de données pour le processus de type HARQ a été correctement reçue ou non,
l'identification de ressources de communication de l'interface d'accès sans fil permettant de transmettre un canal de commande de liaison montante physique associé à chacune de la pluralité de transmissions en liaison descendante, les ressources de communication de canal de commande de liaison montante physique étant identifiées pour la transmission des HARQ-ACK pour la pluralité de transmissions de liaison descendante reçues en guise de pluralité de messages de commande de liaison montante, et
après un certain temps où la pluralité de messages de commande de liaison montante sont identifiés pour transmission, la réception d'un déclencheur en tant que message de commande de liaison descendante provenant du réseau de communications sans fil pour transmettre ou retransmettre un message ciblé parmi la pluralité de liaison montante des messages de commande dans une ou des unités de ressources temporelles ultérieures des ressources de communications de l'interface d'accès sans fil indiquées par le déclencheur, le message de commande de liaison montante ciblé étant indiqué à l'aide d'un indicateur fin comprenant un décalage temporel identifiant l'une de la pluralité d'unités de ressources temporelles qui comporte le message de commande de liaison montante ciblé,
la détermination d'une plus petite granularité de créneau ou de sous-créneau utilisée par un ou des décalages temporels (K1) pour identifier un nombre de créneaux ou sous-créneaux dans lesquels la pluralité de messages de commande de liaison montante ont été programmés par rapport à la pluralité de transmissions de liaison descendante dans les ressources de canal partagé de liaison descendante physique, dans lequel le décalage temporel identifiant l'une de la pluralité d'unités de ressources temporelles qui comporte le message de commande de liaison montante ciblé indique un nombre de créneaux ou de sous-créneaux à l'aide de la plus petite granularité déterminée, et
en réponse au déclenchement, la transmission ou la retransmission du message de commande de liaison montante ciblé transportant un ou plusieurs des HARQ-ACK.

2. Procédé selon la revendication 1, dans lequel le dispositif de communications est configuré avec deux livres de codes HARQ-ACK ou plus pour communiquer les unités de données transportées par les différents processus de type HARQ, chaque livre de codes étant associé à une granularité différente pour le ou les décalages temporels (K1) utilisés pour identifier les créneaux ou sous-créneaux dans lesquels la pluralité des messages de commande de liaison montante ont été programmés par rapport à la pluralité de transmissions en liaison descendante dans les ressources de canal partagé de liaison descendante physique.

3. Procédé selon la revendication 1, dans lequel le dispositif de communications est configuré avec deux porteuses composantes ou plus pour communiquer les unités de données transportées par les différents processus de type HARQ, chaque porteuse composante fournissant une granularité différente pour le ou les décalages temporels (K1) utilisés pour identifier les créneaux ou sous-créneaux dans lesquels la pluralité des messages de commande de liaison montante ont été programmés par rapport à la pluralité de transmissions en liaison descendante dans les ressources de canal partagé de liaison descendante physique.

4. Procédé selon la revendication 3, dans lequel le message de commande de liaison descendante reçu du réseau de communications sans fil comporte une indication d'une porteuse composante du message de commande de liaison montante cible.

5. Procédé selon la revendication 1, dans lequel les ressources de communication de l'interface d'accès sans fil comprennent une pluralité de symboles multiplexés par répartition orthogonale de fréquence, OFDM, dans chaque créneau ou sous-créneau et le décalage temporel qui identifie l'unité de ressource temporelle qui comporte le message de commande de liaison montante ciblée comporte un nombre de créneaux ou sous-créneaux et un nombre de symboles OFDM (*S_{ReTx}*), le nombre de créneaux ou sous-créneaux indiquant un créneau ou un sous-créneau qui comporte le message de commande de liaison montante ciblé et le nombre de symboles OFDM (*S_{ReTx}*) indiquant un symbole OFDM dans le créneau ou sous-créneau indiqué dans lequel le message de commande de liaison montante ciblée commence ou se termine.

6. Procédé selon la revendication 5, dans lequel le nombre de symboles OFDM (*S_{ReTx}*) indique le symbole OFDM dans le créneau ou sous-créneau indiqué dans lequel le message de commande de liaison montante ciblé commence ou se termine en tant que décalage par rapport au début ou à la fin du créneau ou du sous-créneau indiqué.

7. Procédé selon la revendication 1, dans lequel le décalage temporel qui identifie l'unité de ressources temporelles qui comporte le message de commande de liaison montante ciblé indique le créneau ou le sous-créneau dans lequel la liaison montante ciblée parmi la pluralité de messages de commande de liaison montante a été programmée pour transmission et le procédé comprend l'identification de la liaison montante ciblée parmi la pluralité de messages de commande de liaison montante qui commence dans le créneau ou sous-créneau identifié dans lequel le message de commande de liaison montante était programmé pour transmission.

8. Procédé selon la revendication 1, dans lequel le décalage temporel qui identifie l'unité de ressources temporelles qui comporte le message de commande de liaison montante ciblé indique le créneau ou le sous-créneau dans lequel la liaison montante ciblée parmi la pluralité de messages de commande de liaison montante était programmé pour transmission et le procédé comprend l'identification de l'un ciblé parmi la pluralité de messages de commande de liaison montante qui se termine dans le créneau ou sous-créneau identifié dans lequel le message de commande de liaison montante était programmé pour transmission.

9. Procédé selon la revendication 1, comprenant
l'identification du message de commande de liaison montante ciblé d'une pluralité des messages de commande de liaison montante qui sont programmés pour transmission dans la même unité de ressource temporelle qui comporte le message de commande de liaison montante ciblé indiqué par le décalage temporel.

10. Procédé de fonctionnement d'un équipement d'infrastructure d'un réseau de communications sans fil pour transmettre des données à un dispositif de communications, le procédé comprenant
la transmission d'une pluralité de transmissions de liaison descendante dans des ressources de canal partagé de liaison descendante physique faisant partie de ressources de communication d'une interface d'accès sans fil fournies par le réseau de communications sans fil qui sont divisées en temps en une pluralité d'unités de ressources temporelles comprenant des créneaux et des sous-créneaux, chacune de la pluralité de transmissions de liaison descendante étant une transmission d'une unité de données selon un processus de type à demande de répétition automatique hybride, HARQ, chacune parmi la pluralité de transmissions physiques en liaison descendante étant associée à un canal de commande de liaison montante physique faisant partie des ressources de communication de l'interface d'accès sans fil permettant de transmettre un accusé de réception HARQ ou un accusé de réception négatif, HARQ-ACK, pour chacune de la pluralité de transmissions de liaison descendante reçues, conformément au fait que l'unité de données pour le processus de type HARQ a été correctement reçue ou non, les ressources de communication du canal de commande de liaison montante physique étant identifiées pour réception en tant que pluralité de messages de commande de liaison montante, et
après un certain temps où la pluralité de messages de commande de liaison montante sont identifiés pour réception, la transmission d'un déclencheur en tant que message de commande de liaison descendante au dispositif de communications pour transmettre ou retransmettre un message de commande ciblé parmi la pluralité de messages de commande de liaison montante dans une ou plusieurs unités de ressources temporelles ultérieures des ressources de communications de l'interface d'accès sans fil indiquées par le déclencheur, le message de commande de liaison montante ciblée étant indiqué à l'aide d'un indicateur fin comprenant un décalage temporel identifiant l'une de la pluralité d'unités de ressources temporelles qui comporte le message de commande de liaison montante ciblé, et
en réponse au déclencheur, la réception du message de commande de liaison montante ciblé transportant un ou plusieurs des HARQ-ACK, dans lequel
le décalage temporel identifiant l'une de la pluralité d'unités de ressources temporelles qui comporte le message de commande de liaison montante ciblé indique un nombre de créneaux ou sous-créneaux à l'aide d'une plus petite granularité déterminée, la plus petite granularité déterminée étant une plus petite granularité de créneau ou de sous-créneau utilisée par un ou plusieurs décalages temporels (K1) pour identifier un nombre des créneaux ou sous-créneaux dans lesquels la pluralité des messages de commande de liaison montante ont été programmés par rapport à la pluralité de transmissions en liaison descendante dans les ressources de canal partagé de liaison descendante physique.

11. Système de circuit destiné à un dispositif de communications destiné à fonctionner dans un réseau de communications sans fil, le système de circuit comprenant
un système de circuit émetteur-récepteur configuré pour transmettre et/ou recevoir des signaux, et
un système de circuit de commande configurés en combinaison avec le système de circuit émetteur-récepteur pour
recevoir une pluralité de transmissions de liaison descendante dans des ressources de canal partagé de liaison descendante physique faisant partie de ressources de communications d'une interface d'accès sans fil fournies par le réseau de communications sans fil qui sont divisées en temps en une pluralité d'unités de ressources temporelles comprenant des créneaux et des sous-créneaux, chacune de la pluralité de transmissions de liaison descendante étant une transmission d'une unité de données selon un processus de type à demande de répétition automatique hybride, HARQ,
déterminer un accusé de réception HARQ ou un accusé de réception négatif, HARQ-ACK, pour chacune de la pluralité de transmissions de liaison descendante reçues conformément au fait que l'unité de données pour le processus de type HARQ a été correctement reçue ou non,
identifier des ressources de communication de l'interface d'accès sans fil permettant de transmettre un canal de commande de liaison montante physique associé à chacune de la pluralité de transmissions en liaison descendante, les ressources de communication du canal de commande de liaison montante physique étant identifiées pour la transmission des HARQ-ACK pour la pluralité de transmissions de liaison descendante reçues en guise de pluralité de messages de commande de liaison montante, et
après un certain temps où la pluralité de messages de commande de liaison montante sont identifiés pour transmission, recevoir un déclencheur en tant que message de commande de liaison descendante en provenance du réseau de communications sans fil pour transmettre ou retransmettre un message ciblé parmi la pluralité des messages de commande de liaison montante dans une ou plusieurs unités de ressources temporelles ultérieures des ressources de communications de l'interface d'accès sans fil indiquées par le déclencheur, le message de commande de liaison montante ciblé étant indiqué à l'aide d'un indicateur fin comprenant un décalage temporel identifiant l'une de la pluralité d'unités de ressources temporelles qui comporte le message de commande de liaison montante ciblé,
déterminer une plus petite granularité de créneau ou de sous-créneau utilisée par un ou des décalages temporels (K1) pour identifier un nombre de créneaux ou sous-créneaux dans lesquels la pluralité de messages de commande de liaison montante ont été programmés par rapport à la pluralité de transmissions de liaison descendante dans les ressources de canal partagé de liaison descendante physique, dans lequel le décalage temporel identifiant l'une de la pluralité d'unités de ressources temporelles qui comporte le message de commande de liaison montante ciblé indique un nombre de créneaux ou de sous-créneaux à l'aide de la plus petite granularité déterminée, et
en réponse au déclenchement, transmettre ou retransmettre le message de commande de liaison montante ciblé transportant un ou plusieurs des HARQ-ACK.

12. Dispositif de communications fonctionnel pour la réception de données en provenance d'un réseau de communications sans fil, le dispositif de communications comprenant un système de circuit selon la revendication 11.

13. Système de circuit d'un équipement d'infrastructure d'un réseau de communications sans fil fonctionnel pour la transmission de données à un dispositif de communications, le système de circuit comprenant
un système de circuit émetteur-récepteur configuré pour transmettre et/ou recevoir des signaux, et
un système de circuit de commande configuré en combinaison avec le système de circuit émetteur-récepteur pour
transmettre une pluralité de transmissions de liaison descendante dans des ressources de canal partagé de liaison descendante physique faisant partie de ressources de communications d'une interface d'accès sans fil fournies par le réseau de communications sans fil qui sont divisées en temps en une pluralité d'unités de ressources temporelles comprenant des créneaux et des sous-créneaux, chacune de la pluralité de transmissions de liaison descendante étant une transmission d'une unité de données selon un processus de type à demande de répétition automatique hybride, HARQ, chacune parmi la pluralité de transmissions physiques en liaison descendante étant associée à un canal de commande de liaison montante physique faisant partie des ressources de communication de l'interface d'accès sans fil pour la transmission d'un accusé de réception HARQ ou accusé de réception négatif, HARQ-ACK, pour chacune de la pluralité de transmissions de liaison descendante reçues, conformément au fait que l'unité de données pour le processus de type HARQ a été correctement reçue ou non, les ressources de communication du canal de commande de liaison montante physique étant identifiées pour réception en tant que pluralité de messages de commande de liaison montante, et
après un temps où la pluralité de messages de commande de liaison montante sont identifiés pour réception, transmettre un déclencheur en tant que message de commande de liaison descendante au dispositif de communications pour transmettre ou pour retransmettre un message de commande ciblé parmi la pluralité de messages de commande de liaison montante dans une ou plusieurs unités de ressources temporelles ultérieures des ressources de communication de l'interface d'accès sans fil indiquées par le déclencheur, le message de commande de liaison montante ciblée étant indiqué à l'aide d'un indicateur fin comprenant un décalage temporel identifiant l'une de la pluralité d'unités de ressources temporelles qui comporte le message de commande de liaison montante ciblé, et
en réponse au déclenchement, recevoir le message de commande de liaison montante ciblé transportant un ou plusieurs des HARQ-ACK, dans lequel
le décalage temporel identifiant l'une de la pluralité d'unités de ressources temporelles qui comporte le message de commande de liaison montante ciblé indique un nombre de créneaux ou sous-créneaux à l'aide d'une plus petite granularité déterminée, la plus petite granularité déterminée étant une plus petite granularité de créneau ou de sous-créneau utilisée par un ou plusieurs décalages temporels (K1) pour identifier un nombre de créneaux ou sous-créneaux dans lesquels la pluralité des messages de commande de liaison montante ont été programmés par rapport à la pluralité de transmissions en liaison descendante dans les ressources de canal partagé de liaison descendante physique.

14. Équipement d'infrastructure pour un réseau de communications sans fil fonctionnel pour transmettre des données à un dispositif de communications, l'équipement d'infrastructure comprenant un système de circuits selon la revendication 13.

15. Programme informatique comprenant des instructions qui, lorsque le programme est exécuté par un ordinateur, amènent l'ordinateur à effectuer le procédé selon la revendication 1 ou la revendication 10.
